# EUROPÄISCHE PATENTSCHRIFT

(11) **EP 4 385 044 B1**
(45) Veröffentlichungstag und Bekanntmachung des Hinweises auf die Patenterteilung: **04.03.2026**
(21) Anmeldenummer: 22765044.7
(22) Anmeldetag: 11.08.2022
(51) Int. Cl.: G21C 17/06, G01K 17/00, G01N 25/20, G21C 19/07

(54) **VORRICHTUNG ZUR KALORIMETRISCHEN BESTIMMUNG DER NACHZERFALLSLEISTUNG VON BRENNELEMENTEN**
DEVICE FOR CALORIMETRIC DETERMINATION OF THE DECAY POWER OF FUEL ELEMENTS
DISPOSITIF DE DÉTERMINATION CALORIMÉTRIQUE DE LA PUISSANCE RÉSIDUELLE D'ÉLÉMENTS COMBUSTIBLES

(30) Priorität: 12.08.2021 EP 21191047
(43) Veröffentlichungstag der Anmeldung: 19.06.2024
(73) Patentinhaber: Kernkraftwerk Gösgen-Däniken AG, 4658 Däniken (CH)
(72) Erfinder: KAULBARSCH, Rainer, 5200 Brugg (CH); JATUFF, Fabian, 5116 Schinzach-Bad (CH); CARUSO, Stefano, 5322 Koblenz (CH); ORNOT, Leo, 5036 Oberentfelden (CH); RIEKER, Marcel, 5013 Niedergösgen (CH); PAPINI, Davide, 5408 Ennetbaden (CH)
(74) Vertreter: Bohest AG
(86) Internationale Anmeldenummer: PCT/EP2022/072500
(87) Internationale Veröffentlichungsnummer: WO 2023/017105

(56) Entgegenhaltungen:
- DE-C1- 19 748 222
- FR-A1- 2 170 795
- MAEDA S ET AL: "Decay heat of Fast Reactor Spent Fuel", JOURNAL OF NUCLEAR SCIENCE AND TECHNOLOGY, ATOMIC ENERGY SOCIETY OF JAPAN, JP, vol. 2, 1 August 2002 (2002-08-01), pages 1101 - 1104, XP002612897, ISSN: 0022-3131

## Beschreibung

### GEBIET DER ERFINDUNG

Die Erfindung betrifft eine Vorrichtung zur kalorimetrischen Bestimmung der Nachzerfallsleistung von Brennelementen.

### HINTERGRUND DER ERFINDUNG

Ein besonderes Augenmerk beim Betrieb von Kernkraftwerken liegt auf dem Umgang mit abgebrannten Brennelementen. Sobald Brennelemente ihre vorgesehene Nutzungszeit im Reaktorkern beendet haben, werden diese zunächst in ein sogenanntes Abklingbecken verbracht. Hier müssen die abgebrannten Brennelemente noch einige Zeit abklingen, bevor diese in Transport-, Zwischenlagerungs- bzw. Endlagerungsbehälter verbracht werden können. Das Abklingen ist notwendig, da Brennelemente noch für einige Zeit eine hohe Wärmemenge und Strahlung - die sogenannte Nachzerfallsleistung - abgeben, wenn sie nach ihrer Nutzungszeit aus dem Reaktorkern entnommen werden. Die Nachzerfallsleistung entsteht dadurch, dass nach dem Beenden der Kernspaltungsreaktion in den Brennelementen in der Regel noch kurzlebige Spaltprodukte vorhanden sind, die weiter radioaktiv zerfallen und Nachwärme produzieren. Dabei kommt es zumindest anfänglich zu einer hohen Wärmefreisetzung, die eine Lagerung in Transport-, Zwischenlagerungs- bzw. Endlagerungsbehältern in einer optimierten Kompaktanordnung verhindert.

Daher ist es notwendig, die abgebrannten Brennelemente noch einige Zeit in einem Abklingbecken - gegebenenfalls auch aktiv - zu kühlen, bis die Nachzerfallsleistung soweit abgefallen ist, dass diese in die erwähnten Transport-, Zwischenlagerungs- bzw. Endlagerungsbehälter verbracht werden können. Dabei ist es naturgemäss wünschenswert, die Verweildauer im Abklingbecken einerseits ausreichend lang zu bemessen, andererseits aber auch eine unnötig lange Lagerung im Abklingbecken zu vermeiden. Dies macht es erforderlich, die Nachzerfallsleistung, die gekoppelt ist mit der Strahlendosis, der abgebrannten Brennelemente möglichst präzise zu bestimmen. Die Nachzerfallsleistung eines abgebrannten Brennelementes wird im Regelfall berechnet. Zur Bestimmung der Berechnungsungenauigkeiten und zur Validierung der Berechnungsmethoden sind empirische Versuche erforderlich, um die Nachzerfallsleistung zu messen. Durch entsprechende Versuchsanordnungen, insbesondere durch die Verwendung von Kalorimetern, werden die Margen exakter und die Berechnugsungenauigkeiten bestimmt.

Selbstredend ist die Messung der Nachzerfallsleistung zwingend unter Beachtung der erforderlichen Sicherheitsmassnahmen durchzuführen, insbesondere im Hinblick auf die von abgebrannten Brennelementen freigesetzte Radioaktivität.

Der Artikel "Decay Heat of Fast Reactor Spent Fuel" von Shigetaka Maeda und Takafumi Aoyama, Journal of Nuclear Science and Technology, Atomic Energy Society of Japan, Band 2, August 2002, Seiten 1101-1104, XP002612897, ISSN: 0022-3131, offenbart beispielsweise eine Vorrichtung zur kalorimetrischen Bestimmung der Nachzerfallsleistung von Brennelementen, aufweisend:
- einen zur Anordnung in einem Kühlmittelbecken geeigneten Kalorimeterbehälter mit einem vertikalen Kalorimeterschacht zur Aufnahme eines Brennelements, mit einem Kühlmittel-Einlass zum Zuführen von Kühlmittel in den Kalorimeterschacht und mit einem Kühlmittel-Auslass zum Entnehmen von Kühlmittel aus dem Kalorimeterschacht, wobei der Kalorimeterschacht an einem oberen Ende eine obere Schachtöffnung zum Einbringen bzw. Entnehmen des Brennelements in den bzw. aus dem Kalorimeterschacht aufweist;
- ein Leitungssystem aufweisend eine mit dem Kühlmittel-Einlass verbundene Kühlmittel-Zufuhrleitung;
- eine ausgangsseitig mit der Kühlmittel-Zufuhrleitung verbundene Förderpumpe zum Erzeugen eines Kühlmittelstroms durch den Kalorimeterschacht entlang des Brennelements;
- eine Durchfluss-Messeinrichtung in der Kühlmittel-Zufuhrleitung zum Bestimmen der im Betrieb aus dem Kalorimeterschacht entnommenen Kühlmittelmenge;
- eine erste Temperatur-Messeinrichtung am Kühlmittel-Einlass zum Bestimmen der Temperatur des im Betrieb in den Kalorimeterschach zugeführten Kühlmittels;
- eine zweite Temperatur-Messeinrichtung am Kühlmittel-Auslass zum Bestimmen der Temperatur des im Betrieb aus dem Kalorimeterschacht (2a) entnommenen Kühlmittels;
- einen Behälterdeckel zum teilweisen Verschliessen der oberen Schachtöffnung, in dem der Kühlmittel-Auslass angeordnet ist.

Diese Vorrichtung und weitere bislang vorgeschlagene Vorrichtungen und Verfahren zur Messung der Nachzerfallsleistung sind zwar grundsätzlich funktionstüchtig, weisen jedoch Nachteile auf, wie beispielsweise eine mangelnde Genauigkeit, die Verwendung problematischer Messverfahren oder einen erheblichen Aufwand.

Die Aufgabe der vorliegenden Erfindung besteht somit darin, eine Vorrichtung zur kalorimetrischen Bestimmung der Nachzerfallsleistung von Brennelementen vorzuschlagen, welche gegenüber derartigen, im Stand der Technik bekannten Vorrichtungen verbessert ist.

Eine Vorrichtung gemäss Anspruch 1 löst diese Aufgabe.

### ZUSAMMENFASSUNG DER ERFINDUNG

Es wird eine Vorrichtung zur kalorimetrischen Bestimmung der Nachzerfallsleistung von Brennelementen vorgeschlagen, welche aufweist:
- einen zur Anordnung in einem Kühlmittelbecken geeigneten Kalorimeterbehälter mit einem vertikalen Kalorimeterschacht zur Aufnahme eines Brennelements, mit wenigstens einem Kühlmittel-Einlass zum Zuführen von Kühlmittel in den Kalorimeterschacht und mit wenigstens einem Kühlmittel-Auslass zum Entnehmen von Kühlmittel aus dem Kalorimeterschacht, wobei der Kalorimeterschacht an einem oberen Ende eine obere Schachtöffnung zum Einbringen bzw. Entnehmen des Brennelements in den bzw. aus dem Kalorimeterschacht aufweist;
- ein Leitungssystem aufweisend wenigstens eine mit dem Kühlmittel-Auslass verbundene Kühlmittel-Entnahmeleitung und vorzugsweise eine mit dem Kühlmittel-Einlass verbundene Kühlmittel-Zufuhrleitung;
- eine eingangsseitig mit der Kühlmittel-Entnahmeleitung verbundene Förderpumpe zum Erzeugen eines Kühlmittelstroms, insbesondere eines definierten Kühlmittelstroms, durch den Kalorimeterschacht entlang des Brennelements (zwischen Kühlmittel-Einlass und Kühlmittel-Auslass) und zum Entnehmen von Kühlmittel aus dem Kalorimeterschacht über den Kühlmittel-Auslass und die Kühlmittel-Entnahmeleitung;
- eine Durchfluss-Messeinrichtung am Kühlmittel-Auslass oder in der Kühlmittel-Entnahmeleitung zum Bestimmen der im Betrieb aus dem Kalorimeterschacht entnommenen Kühlmittelmenge;
- eine erste Temperatur-Messeinrichtung am Kühlmittel-Einlass oder - soweit vorhanden - in der Kühlmittel-Zufuhrleitung zum Bestimmen der Temperatur des im Betrieb in den Kalorimeterschacht zugeführten Kühlmittels;
- eine zweite Temperatur-Messeinrichtung am Kühlmittel-Auslass oder in der Kühlmittel-Entnahmeleitung zum Bestimmen der Temperatur des im Betrieb aus dem Kalorimeterschacht entnommenen Kühlmittels; und
- einen Verschlussdeckel zum reversiblen Verschliessen der oberen Schachtöffnung, wobei der Verschlussdeckel im Betrieb durch den von der Förderpumpe im Kalorimeterschacht gegenüber der Umgebung erzeugten Unterdruck dichtend auf der oberen Schachtöffnung gehalten wird.

In vorteilhafter Weise erlaubt die hier vorgeschlagene Vorrichtung insbesondere bei der rechnerischen Ermittlung der Nachzerfallsleistung abgebrannter Brennelemente eine bessere Validierung der Berechnungsmethoden sowie eine bessere Bestimmung der Berechnungsungenauigkeiten, als dies mit vorbekannten Vorrichtungen bisher möglich war. Im Ergebnis wird dadurch die Sicherheit im Umgang mit abgebrannten Brennelementen verbessert.

Der Kalorimeterbehälter weist vorzugsweise eine im Wesentlichen zylindrische Form auf. Im Querschnitt senkrecht zur Vertikalen kann der Kalorimeterbehälter, insbesondere der Kalorimeterschacht eine (kreis)runde oder rechteckige, insbesondere quadratische Form aufweisen. Durch die vertikale Anordnung des Kalorimeterschachts wird einerseits das Beladen bzw. Entladen des zu prüfenden Brennelements erleichtert. In vorteilhafter Weise sind zum Beladen bzw. Entladen des Kalorimeterschachts die üblicherweise bei Kühlmittelbecken (Abklingbecken) ohnehin vorhandenen Ladevorrichtungen für Brennelemente verwendbar. Weiterhin kann durch die vertikale Ausrichtung des Kalorimeterschachts in vorteilhafter Weise natürliche Konvektion zur Wärmeabgabe an das durchströmende Kühlmittel ausgenutzt werden, das in Folge dessen im Kalorimeterschacht aufsteigt. Auch die Ansammlung von Gastaschen bzw. Gasblasen kann durch die vertikale Ausrichtung des Kalorimeterschachts auf einfache Weise wirksam verhindert werden. Derartige Ansammlungen von Gas könnten beispielsweise eine ausreichende Kühlung zur Abfuhr der Nachzerfallswärme in unzulässigem Masse vermindern/verhindern, oder aber auch die Messgenauigkeit der Vorrichtung zur kalorimetrischen Bestimmung negativ beeinflussen. Durch die obere Schachtöffnung am oberen Ende des Kalorimeterschachts ist das Entnehmen und Beladen besonders einfach, insbesondere bei Verwendung der bereits erwähnten Ladevorrichtungen.

Der vertikale Kalorimeterschacht weist vorteilhafterweise eine ausreichende thermische Isolierung nach aussen hin auf, um auf diese Weise eine möglichst hohe Messgenauigkeit zu realisieren. Insbesondere kann dadurch eine Zufuhr bzw. Abfuhr von Wärme aus dem umgebenden Medium des Kühlmittelbeckens (Abklingbeckens) heraus bzw. in dieses hinein (typischerweise in dieses hinein) in aller Regel in ausreichendem Masse verhindert werden. Die Isolierung des Kalorimeterbehälters kann dabei grundsätzlich in beliebiger Weise erfolgen. Insbesondere ist kann die Isolierung dämmende Materialien aufweisen, aber auch zusätzlich oder alternativ eine Vakuumisolierung.

Ferner ist es denkbar, dass innerhalb des Kalorimeterbehälters noch zusätzliche Kühlmittel-Leitbleche vorgesehen sind, um eine für den vorgesehenen Zweck optimierte Kühlmittelströmung im Kalorimeterbehälter zu optimieren. Die Durchströmung des Kühlmittels durch den Kalorimeterschacht erfolgt in einer Normalbetriebsstellung/Messstellung der Vorrichtung in aller Regel zwischen dem Kühlmittel-Einlass und dem Kühlmittel-Auslass, insbesondere vom Kühlmittel-Einlass zum Kühlmittel-Auslass hin. Insbesondere kann dadurch eine gleichmässige Durchströmung sichergestellt werden, vorzugsweise ohne, dass nichtdurchströmte bzw. schlecht durchströmte Bereiche, insbesondere im Bereich des Brennelements, entstehen.

Die vorgeschlagene Ausbildung und Anordnung der Förderpumpe zum Erzeugen des Kühlmittelstroms, also insbesondere deren Fluidverbindung mit der Kühlmittel-Entnahmeleitung, ist insbesondere dahingehend von Vorteil, dass hierdurch im Betrieb der Vorrichtung im Kalorimeterbehälter ein leichter relativer Unterdruck entsteht. Durch den Unterdruck relativ zur Umgebung (Druck im Kühlmittelbecken) kann der Verschlussdeckel reversibel auf der oberen Schachtöffnung gehalten werden, sodass in diesem Bereich kein Kühlmittel (oder nur minimal Kühlmittel) einströmen kann, was die Messgenauigkeit erhöht. Gleichzeitig wird dadurch ein besonders sicherer Betrieb möglich, da bei einer Minderleistung bzw. bei einem Ausfall der Förderpumpe der relative Unterdruck im Kalorimeterbehälter zusammenbricht und sich dadurch der Verschlussdeckel selbsttätig öffnen kann. Dies ermöglicht anschliessend eine passive Durchströmung des Kalorimeterschachts aufgrund von thermisch induzierten Dichteunterschieden (natürliche Konfektion), wodurch in der Regel eine ausreichende Notkühlung sichergestellt werden kann. Dies ist im Hinblick auf sogenannte Fail-Safe-Anforderungen besonders vorteilhaft.

Am Beginn einer Messung kann der Verschlussdeckel zum reversiblen Verschliessen der oberen Schachtöffnung vorzugsweisedurch geeignete Mittel in seine reversible Verschlussstellung gebracht und so lange in dieser Position gehalten werden muss, bis die mit der Kühlmittel-Entnahmeleitung verbundene Förderpumpe eingeschaltet wurde und sich der für das Niederhalten des Verschlussdeckels notwendigen Unterdruck aufgebaut ist. Auch ist es möglich, den Verschlussdeckel nach dem Einschalten der Förderpumpe in seine reversible Verschlussstellung zu bringen. Grundsätzlich kann dies durch einen entsprechenden manuellen Handhabungsschritt des Bedienpersonals erfolgen, aber auch in zumindest teilweise automatisierter Weise durch eine Verschlussdeckel-Schliessvorrichtung, welche den Verschlussdeckel in einer Anfahrphase der vorgeschlagenen Vorrichtung in seine reversible Verschlussstellung bringt. Es ist jedoch darauf hinzuweisen, dass der Verschlussdeckel durch derartige Handhabungsschritte bzw. Schliessvorrichtungen nicht dauerhaft in seiner reversiblen Verschlussstellung gehalten wird bzw. gehalten werden sollte. Ein dauerhaftes Halten des Verschlussdeckels in seiner reversiblen Verschlussstellung erfolgt vorzugsweise ausschliesslich durch den relativen Unterdruck, der durch die Förderpumpe in das System eingetragen wird (bzw. sollte hierdurch erfolgen). "Dauerhaft" ist in diesem Zusammenhang insbesondere zumindest die Zeitdauer, die für die vorgesehenen kalorimetrischen Messungen erforderlich sind.

Insbesondere wird vorgeschlagen, dass die mittlere Dichte des Verschlussdeckels kleiner als 990 kg/m³ ist. In diesem Fall ist die mittlere Dichte des Verschlussdeckels ausreichend niedrig, damit er sich bei ausgeschalteter, funktionsuntüchtiger bzw. nicht ausreichend funktionstüchtiger Förderpumpe zur Erzeugung eines Kühlmittelstroms selbsttätig öffnet. Dies gilt insbesondere im Hinblick auf das typischerweise in Kühlmittelbecken (Abklingbecken) genutzte Umgebungsmedium und/oder das typischerweise genutzte Kühlmittel, nämlich Wasser. Der Vollständigkeit halber wird darauf hingewiesen, dass das Wasser gegebenenfalls mit geeigneten Zuschlägen (z.B. Borsäure) versehen sein kann, wie sie grundsätzlich im Stand der Technik bekannt sind und/oder Wasser verwendet werden kann, welches im Vergleich zu natürlich vorkommendem Wasser einen erhöhten Anteil an schwerem Wasser aufweist.

Die kalorimetrische Bestimmung der Nachzerfallsleistung erfolgt im Wesentlichen durch Bestimmung der Temperaturerhöhung des Kühlmittels beim Durchströmen der Vorrichtung (und dabei auch beim Vorbeiströmen am Brennelement), wobei die Temperaturerhöhung mit der Durchflussmenge des Kühlmittels in Relation gesetzt wird. Dieses Messprinzip ist als solche im Stand der Technik bekannt. Die Durchflussmenge des Kühlmittels kann dabei durch zumindest eine Durchfluss-Messeinrichtung am Kühlmittel-Auslass und/oder in der Kühlmittel-Entnahmeleitung bestimmt werden. Hierbei können grundsätzlich beliebige im Stand der Technik bekannte Durchflussmengenmessgeräte verwendet werden, wie beispielsweise Coriolis-Durchflussmessgeräte. Derartige (Coriolis-)Durchflussmessgeräte sind kommerziell erhältlich und haben sich für den vorgesehenen Verwendungszweck als geeignet erwiesen. Die Temperaturerhöhung des Kühlmittels beim Durchgang durch die Vorrichtung wird durch eine Temperaturdifferenzmessung unter Verwendung von zumindest zwei Temperatur-Messeinrichtungen bestimmt, von denen eine am Kühlmittelauslass oder in der Kühlmittel-Entnahmeleitung (bzw. am Rand der Kühlmittel-Entnahmeleitung), die andere am Kühlmittel-Einlass oder - soweit vorhanden - in der Kühlmittel-Zufuhrleitung angeordnet ist (bzw. am Rand der Kühlmittel-Zufuhrleitung angeordnet ist). Es ist darauf hinzuweisen, dass aufgrund der mechanischen Leistung der Förderpumpe eine gewisse thermische Leistung in das Kühlmittel eingetragen wird. Dementsprechend ist es vorteilhaft, wenn der darauf zurückzuführende thermische Energieeintrag in das Kühlmittel bei der anschliessenden kalorimetrischen Messung bzw. Berechnung berücksichtigt wird. Da die mit der Kühlmittel-Entnahmeleitung verbundene Förderpumpe in der Regel mit einer gleichbleibenden Geschwindigkeit betrieben wird, ist durch eine vorhergehende exakte Kalibrationsmessung eine gute Genauigkeitsbestimmung möglich. Geeignete Temperatur-Messsensoren sind als solche ebenfalls grundsätzlich im Stand der Technik bekannt. Dabei ist insbesondere der relative Temperaturunterschied zwischen den beiden Messpunkten von Bedeutung, wohingegen die absolute Temperatur von eher untergeordneter Bedeutung ist. Entsprechend ist es wichtig, dass die betreffenden Temperatur-Messeinrichtungen vorzugsweise eine besonders präzise Differenztemperatur-Messung ermöglichen, wobei die Genauigkeit derselben gegebenenfalls auch durch eine vorherige Kalibrierung der Temperatur-Messeinrichtungen gefördert werden kann. Insbesondere bieten sich als Temperatur-Messeinrichtungen kommerziell erhältliche Temperatur-Messquarzsonden an, welche sich für den vorgesehenen Anwendungszweck als besonders vorteilhaft erwiesen haben.

Zusätzlich oder alternativ kann die Messgenauigkeit der Vorrichtung dadurch erhöht werden, dass Gamma-Strahlungsumwandlungsmittel (zum Beispiel ein Bleimantel) zur Umwandlung von Gammastrahlung in thermische Energie vorgesehen werden. Die Gamma-Strahlungsumwandlungsmittel sind vorzugsweise so im Kalorimeterbehälter angeordnet, dass sie zu dem im Betrieb im Kalorimeterschacht aufgenommenen Brennelement benachbart angeordnet sind bzw. das im Betrieb im Kalorimeterschacht aufgenommene Brennelement zumindest bereichsweise umgeben. Auf diese Weise kann auch die Gamma-Nachzerfallsleistung mittels der vorgeschlagenen kalorimetrischen Messung bestimmt werden, was von Vorteil ist.

Weiterhin wird vorgeschlagen, dass bei der Vorrichtung der Kühlmittel-Auslass am oberen Ende des Kalorimeterschachts unterhalb der oberen Schachtöffnung angeordnet ist. Hierdurch wird eine Durchströmungsrichtung des Kalorimeterschachts realisiert, bei der potenziell instabile Dichteschichtungen vermieden werden können, welche wiederum zu eskalierenden Messfehlern führen könnten. Denn in dieser Konfiguration fallen die Hauptrichtung der natürlichen Konvektionsströmung des Kühlmittels (Erhitzung durch die Nachzerfallsleistung der Brennelemente) und die die Hauptrichtung der durch die Förderpumpe induzierte Strömung zusammenfallen. Der Kühlmittel-Auslass kann dabei durch seitliche Öffnungen (beispielsweise mit rundem Querschnitt, schlitzartigen Querschnitt, oder sonstigem Querschnitt realisiert werden. Gegebenenfalls kann auch eine Mehrzahl an Öffnungen vorgesehen sein. Denkbar ist auch, dass der Kühlmittel-Auslass durch (teilweise) ringförmig ausgebildete Leitungen bzw. Leitungssegmente realisiert ist.

Weiterhin wird vorgeschlagen, dass der wenigstens eine Kühlmittel-Einlass wenigstens eine seitlich im Kalorimeterbehälter angebrachte Öffnung und/oder eine in einem allfälligen Boden des Kalorimeterschachts angebrachte Öffnung aufweist. In gleicher Weise kann der Kühlmittel-Auslass wenigstens eine seitlich im Kalorimeterbehälter angebrachte Öffnung aufweisen. Der Kühlmittel-Einlass und/oder der Kühlmittel-Auslass kann ferner einen Schlauchflansch bzw. mit einen Schlauchansteckbereich aufweisen, der mit der seitlich im Kalorimeterbehälter bzw. im Boden des Kalorimeterschachts angebrachten Öffnung in Fluidverbindung steht. Auch eine Mehrzahl von derartigen Anschlüssen ist denkbar. Der Kühlmittel-Einlass und/oder der Kühlmittel-Auslass weist gegebenenfalls auch zumindest einen zumindest teilweise ringförmig ausgebildeten Rohrverteiler auf, um eine weitgehend rotationssymmetrische Einspeisung bzw. Absaugung von Kühlmittel zu realisieren.

Die Vorrichtung kann insbesondere derart ausgebildet sein, dass der Kalorimeterschacht zur Realisierung des Kühlmittel-Auslasses vorzugsweise eine Auslassöffnung, insbesondere einen Auslassstutzen, am oberen Ende des Kalorimeterschachts unterhalb der oberen Schachtöffnung aufweist. Auf diese Weise kann ein besonders grosser Anteil der gesamten Länge des Kalorimeterschachts zur kalorimetrischen Messung genutzt werden. Dadurch können Messfehler verringert werden. Darüber hinaus kann die Länge des Kalorimeterbehälters relativ zur Maximallänge der vom Kalorimeterbehälter aufzunehmenden Brennelemente besonders kurz und kompakt ausfallen. Es ist einsichtig, dass eine derartige möglichst kleine Dimensionierung der Vorrichtung, insbesondere des Kalorimeterbehälters, aus Platzgründen, aber auch aus Messgenauigkeitsgründen - u.a. wegen geringerer Wärmeverluste und geringeren Wärmeeintrags - von Vorteil ist.

Weiterhin wird vorgeschlagen, dass der Kalorienmeterbehälter bzw. der Kalorimeterschacht zur Realisierung des wenigstens einen Kühlmittel-Einlasses nach unten hin offen ist, d.h. ein offenes unteres Ende aufweist bzw. eine untere Öffnung an einem unteren Ende aufweist. In diesem Fall das offene untere Ende bzw. die untere Öffnung am unteren Ende als Kühlmittel-Einlass. Eine derartige Ausbildung kann insbesondere im Hinblick auf eine sogenannte Fail-Safe-Ausführung der Vorrichtung von Vorteil sein. Bei einem Ausfall der Förderpumpe, wenn der relative Unterdruck im Kalorimeterbehälter abfällt, was wiederum dazu führt, dass sich der Verschlussdeckel selbsttätig öffnet, kann sich dann eine passive, thermisch induzierte Konvektionsströmung im Kalorimeterschacht ausbilden. Hierdurch kann in aller Regel eine ausreichende (Not-)Kühlung realisiert werden, um ein Überhitzen der Brennelemente infolge von Nachzerfallsleistung wirksam zu verhindern. Zumindest kann dies für einen gewissen Zeitraum und/oder für bereits zwischengelagerte und teilweise abgeklungene Brennelemente gelten.

Denkbar ist auch, die Vorrichtung derart auszubilden, dass der Kalorimeterschacht an einem unteren Ende einen geschlossenen Boden aufweist. In dieser Konfiguration kann der Kühlmittel-Einlass - wie oben beschrieben - wenigstens eine Öffnung aufweisen, die vorzugsweise seitlich im Kalorimeterbehälter angebracht ist. Insbesondere kann die Vorrichtung - insbesondere im Fall, dass der Kalorimeterschacht an einem unteren Ende einen geschlossenen Boden aufweist - zur Realisierung des wenigstens einen Kühlmittel-Einlasses wenigstens eine obere Einlassöffnung, insbesondere einen oberen Einlassstutzen aufweisen. Die obere Einlassöffnung, insbesondere der oberen Einlassstutzen, sind vorzugsweise unterhalb des Kühlmittel-Auslasses angeordnet. Zusätzlich oder alternativ kann die Vorrichtung wenigstens eine untere Einlassöffnung, insbesondere einen unteren Einlassstutzen, an einem unteren Ende des Kalorimeterschachts, insbesondere am geschlossenen Boden aufweisen. Mit einer derartigen Bauausführung ist insbesondere eine Zuführung von temperierbarem bzw. temperiertem Kühlmittel realisierbar. Beispielsweise kann dies gegenüber dem sonstigen, im Kühlmittelbecken (Abklingbecken) befindlichen Fluid hinsichtlich seiner Temperatur erhöht bzw. abgesenkt sein. Durch die Vortermperierung ist insbesondere eine nochmals verbesserte Messgenauigkeit möglich. Darüber hinaus ist gegebenenfalls auch eine gezieltere Führung des Kühlmittels möglich, insbesondere beispielsweise an einem Gamma-Strahlungsumwandlungsmittel vorbei, sodass auch eine kalorimetrische Messung der Nachzerfallsleistung im Hinblick auf Gammastrahlung möglich ist, bzw. die Messgenauigkeit derselben erhöht werden kann.

Beispielsweise kann die Vorrichtung eine Gamma-Strahlungsumwandlungsmittel - etwa eine Bleiabschirmung - aufweisen, die so angeordnet ist, dass sie das im Betrieb im Kalorimeterschacht aufgenommene Brennelement zumindest bereichsweise umgibt, insbesondere ummantelt. In dieser Konfiguration kann die Vorrichtung zur Realisierung des wenigstens einen Kühlmittel-Einlasses wenigstens eine obere Einlassöffnung aufweisen, von der Kühlmittel oben in den Kalorimeterbehälter eingebracht und auf der Aussenseite der das Brennelement ummantelnden Gamma-Strahlungsumwandlungsmittel (aber innerhalb einer Aussenhülle des Kalorimeterbehälters) nach unten in Richtung Boden des Kalorimeterschachts geführt wird. Von dort kann das Kühlmittel sodann auf der Innenseite bzw. innerhalb der Gamma-Strahlungsumwandlungsmittel im Kalorimeterschacht - entlang des Brennelements - nach oben in Richtung Kühlmittel-Auslass strömen. Dabei nimmt das Kühlmittel auf dem Weg nach unten auf der Aussenseite der Gamma-Strahlungsumwandlungsmittel die von der Gammastrahlung erzeugte Wärme auf und auf dem Weg nach oben innerhalb der Gamma-Strahlungsumwandlungsmittel die unmittelbar abgestrahlte thermische Leistung des Brennelements. Denkbar ist auch, dass die Vorrichtung zur Realisierung des wenigstens einen Kühlmittel-Einlasses wenigstens eine untere Einlassöffnung, insbesondere einen unteren Einlassstutzen, an einem unteren Ende des Kalorimeterschachts, insbesondere am geschlossenen Boden aufweist, von wo aus das Kühlmittel sowohl entlang der Aussenseite der das Brennelement ummantelnden Gamma-Strahlungsumwandlungsmittel als auch innerhalb der Strahlungsumwandlungsmittel entlang des Brennelements nach oben in Richtung Kühlmittel-Auslass strömt, wo es sodann über den dem Kalorimeterbehälter wieder entnommen wird. Auch in dieser Konfiguration wird vom vorbeiströmenden Kühlmittel sowohl die von der Gammastrahlung erzeugte Wärme als auch die unmittelbar abgestrahlte thermische Leistung des Brennelements aufgenommen.

Wie bereits weither oben ausgeführt, kann es weiterhin vorgesehen sein, die Vorrichtung derart auszubilden, dass der Kalorimeterbehälter, die Kühlmittel-Entnahmeleitung - zumindest zwischen dem Kühlmittel-Auslass und der zweiten Temperatur-Messeinrichtung - und, soweit vorhanden, die Kühlmittel-Zufuhrleitung - zumindest zwischen dem Kühlmittel-Einlass und der ersten Temperatur-Messeinrichtung - thermisch isoliert sind bzw. eine Isolation aufweisen. Mit einer derartigen Ausführung kann die Messgenauigkeit der Vorrichtung deutlich erhöht werden. Grundsätzlich sind beliebige Isolationsmittel möglich, wie beispielsweise festkörperschaumartige Isolationsmittel, geschäumte Isolationsmittel und dergleichen.

Zusätzlich oder alternativ kann auf eine Vakuumisolation vorgesehen sein. Bei einer zusätzlichen oder alternativen Verwendung einer Vakuumisolation entsteht zwar in der Regel ein höherer Aufwand (hinsichtlich der bereitzustellenden Vorrichtung, als auch beim Betrieb derselben), jedoch ist ein solch erhöhter Aufwand typischerweise durch die erhöhte Messgenauigkeit zu rechtfertigen. Insbesondere ist in diesem Zusammenhang darauf hinzuweisen, dass die Kühlmittel-Entnahmeleitungen bzw. die Kühlmittel-Zufuhrleitungen in der Regel eine vergleichsweise grosse Länge und darüber hinaus einen vergleichsweise kleinen Durchschnitt aufweisen, sodass das Verhältnis von Oberfläche (über die Wärme aufgenommen bzw. abgegeben werden kann) zum Volumen des in der betreffenden Leitung befindlichen Kühlmittels ("Wärmereservoir") besonders gross ist. Dementsprechend können hierdurch erhebliche Verschlechterungen bezüglich der Messgenauigkeit entstehen, was sinnvollerweise durch geeignete Massnahmen, wie insbesondere die vorliegend vorgeschlagenen Isolationsmassnahmen, angegangen werden sollte.

Zur Realisierung der Vakuumisolation kann es vorgesehen sein, dass der Kalorimeterbehälter, die Kühlmittel-Entnahmeleitung - zumindest zwischen dem Kühlmittel-Auslass und der zweiten Temperatur-Messeinrichtung - und, soweit vorhanden, die Kühlmittel-Zufuhrleitung - zumindest zwischen dem Kühlmittel-Einlass und der ersten Temperatur-Messeinrichtung - doppelwandig mit einer inneren Wandung und einer die innere Wandung umgebenden äusseren Wandung ausgebildet sind, wobei zwischen der inneren Wandung und der äusseren Wandung ein evakuierbarer Zwischenraum gebildet ist. Weiterhin wird vorgeschlagen, dass die Vorrichtung zumindest eine erste Vakuumpumpeneinrichtung zum Erzeugen eines Vakuums im evakuierbaren Zwischenraum aufweist. Auf diese Weise kann das Vakuum zumindest während der Durchführung von Messungen in einen definierten Druckbereich gebracht werden und/oder in diesem gehalten werden. Hierdurch ist einerseits eine besonders gute Isolationswirkung möglich. Andererseits ist es auch möglich, dass ein gegebenenfalls verbleibender thermischer Energieeintrag bzw. thermischer Energieaustrag in die betreffenden Leitungen hinein bzw. aus der betreffenden Leitung heraus eine vergleichsweise genau spezifizierbare Grösse aufweisen kann. Hierdurch ist es insbesondere möglich, dass rechnerisch entsprechende Korrekturen angebracht werden können, sodass die resultierende Messgenauigkeit auf einfache Weise erhöht werden kann.

Gemäss einer weiteren vorteilhaften Ausgestaltung der vorgeschlagenen Vorrichtung kann das Leitungssystem ferner eine Kühlmittel-Rückführleitung aufweisen, wobei ein stromaufwärts gelegenes Ende der Kühlmittel-Rückführleitung ausgangsseitig mit der Förderpumpe verbunden ist, und wobei ein stromabwärts gelegenes Ende der Kühlmittel-Rückführleitung zum Rückführen von Kühlmittel im Kühlmittelbecken anordenbar ist. Hierdurch kann auf einfache Weise ein geschlossener Kreislauf entstehen, insbesondere dahingehend, dass Kühlmittel, welches beispielsweise aus einem Kühlmittelbecken (Abklingbecken) entnommen wird, nach dessen Nutzung zur kalorimetrischen Bestimmung der Nachzerfallsleistung wieder in das Kühlmittelbecken (Abklingbecken) zurückbefördert werden kann. Hierdurch kann die Menge von entstehenden bzw. zu prozessierenden Abwässern in der Regel deutlich gesenkt werden. Dies ist sowohl aus Umweltgesichtspunkten, als auch aus wirtschaftlichen Gesichtspunkten besonders vorteilhaft.

Gemäss einer weiteren vorteilhaften Ausgestaltung kann die vorgeschlagene Vorrichtung ferner eine Kühlmittel-Thermostatiereinrichtung zur Thermostatierung des in den Kalorimeterschacht zuzuführenden Kühlmittels aufweisen. Dabei kann die Kühlmittel-Thermostatiereinrichtung einen Mischbehälter oder eine Mischstrecke, der bzw. die mit einem stromaufwärts gelegenen Ende der Kühlmittel-Zufuhrleitung verbunden ist, und bei Bedarf eine Umwälzpumpe zum Umwälzen von Kühlmittel im Mischbehälter oder in der Mischstrecke aufweisen. Durch eine derartige vorhergehende Thermostatierung des Kühlmittels kann in der Regel eine nochmals erhöhte Messgenauigkeit der kalorimetrischen Messung realisiert werden. Insbesondere kann durch eine geeignete Thermostatierung eine Wärmeabgabe aus dem Kühlmittel heraus bzw. ein Wärmeeintrag in das Kühlmittel hinein wirksam verringert werden, was entsprechend positive Auswirkungen auf die Messgenauigkeit haben kann.

Weiterhin wird vorgeschlagen, dass das Leitungssystem ferner eine Kühlmittel-Ansaugleitung aufweisen kann, wobei ein stromabwärts gelegenes Ende der Kühlmittel-Ansaugleitung in den Mischbehälter oder die Mischstrecke mündet, und wobei ein stromaufwärts gelegenes Ende der Kühlmittel-Ansaugleitung zum Ansaugen von Kühlmittel im Kühlmittelbecken anordenbar ist. Auch hierdurch kann die Menge von entstehenden bzw. von zu prozessierenden Abwässern reduziert werden, wie dies bereits vorab erläutert wurde. Darüber hinaus kann durch die vorgeschlagene Ausbildung der technische Aufwand für eine allfällige Kühlmittel-Thermostatiereinrichtung reduziert werden bzw. gegebenenfalls sogar gänzlich entfallen.

Weiterhin wird vorgeschlagen, dass die Kühlmittel-Thermostatiereinrichtung wenigstens eine erste Temperiereinrichtung zum Heizen oder Kühlen des in den Kalorimeterschacht zuzuführenden Kühlmittels aufweist. Dabei ist die erste Temperiereinrichtung in einem Abschnitt zwischen Mischbehälter oder Mischstrecke und der ersten Messeinrichtung in der oder um die Kühlmittel-Zufuhrleitung angeordnet. Auch ein derartiger Aufbau kann sich im Hinblick auf die realisierbare Messgenauigkeit der kalorimetrischen Messung als vorteilhaft erweisen.

Weiterhin wird bei der Vorrichtung vorgeschlagen, dass die Kühlmittel-Thermostatiereinrichtung eine zweite Temperiereinrichtung zum Heizen oder Kühlen des in den Kalorimeterschacht zuzuführenden Kühlmittels aufweist, wobei die zweite Temperiereinrichtung zum Heizen oder Kühlen in einem Abschnitt zwischen der ersten Temperiereinrichtung zum Heizen oder Kühlen und der ersten Temperatur-Messeinrichtung in der oder um die Kühlmittel-Zufuhrleitung angeordnet ist. Auf diese Weise kann zum einen die Genauigkeit hinsichtlich der Temperierung des Kühlmittels erhöht werden. Zum anderen können dadurch die Temperiereinrichtungen gegebenenfalls auch technisch weniger aufwendig gestaltet werden, da der erforderliche Temperierungsschritt pro Temperiereinrichtung verkleinert werden kann. Die Aufteilung kann dabei symmetrisch erfolgen (in zwei im Wesentlichen gleich grosse Temperierungsschritte), oder aber auch asymmetrisch, beispielsweise derart, dass die in Strömungsrichtung gesehen erste Temperiereinrichtung einen Grossteil der vorgesehenen Temperierung realisiert, wohingegen die zweite Temperiereinrichtung einen anteilmässig kleineren Temperierungsschritt durchführt, diesen aber gegebenenfalls mit einer (insbesondere gegenüber dem ersten Temperierungsschritt) erhöhten Genauigkeit der Temperierung.

Weiterhin wird vorgeschlagen, dass die Vorrichtung eine zweite Vakuumpumpeneinrichtung zum Unterdruck-Befüllen des Leitungssystems und - soweit vorhanden - des Mischbehälters oder der Mischstrecke mit Kühlmittel aufweist. Ein derartiger Aufbau kann es erleichtern, die Vorrichtung in eine Betriebsstellung/Messstellung zu verbringen. Gegebenenfalls kann mit einer derartigen Vakuumpumpeneinrichtung auch ein sinkender Kühlmittelstand, der sich beispielsweise durch längere Messzeiten ergeben kann, wieder aufgefüllt werden.

Weiterhin wird vorgeschlagen, dass bei der vorgeschlagenen Vorrichtung die zweite Vakuumpumpeneinrichtung zum Erzeugen eines Unterdrucks im Mischbehälter oder der Mischstrecke und dem damit verbundenen Leitungssystem direkt mit dem Mischbehälter oder der Mischstrecke verbunden ist. Hierdurch kann eine besonders hohe Regelgenauigkeit hinsichtlich des Füllstands im Mischbehälter bzw. in der Mischstrecke, bzw. ein besonderes zügiges Befüllen des Mischbehälters bzw. der Mischstrecke realisiert werden.

Weiterhin wird vorgeschlagen, dass bei der Vorrichtung das Leitungssystem eine absperrbare Verbindungsleitung zwischen der Kühlmittel-Entnahmeleitung und der Kühlmittel-Zufuhrleitung aufweist. Mithilfe einer derartigen absperrbaren Verbindungsleitung kann insbesondere das Befüllen der Vorrichtung am Anfang einer durchzuführenden Messung erleichtert bzw. beschleunigt werden. Gegebenenfalls kann die absperrbare Verbindungsleitung auch dazu genutzt werden, um einen (teilweisen) Kurzschluss des Kühlmittel-Kreislaufes zu erzielen, wodurch beispielsweise eine besonders effiziente Kalibrierung der Temperatur-Messeinrichtungen/der Temperatur-Messsensoren ermöglicht wird. Die Absperrbarkeit der Verbindungsleitung kann beispielsweise mittels eines geeigneten Absperrventils realisiert werden. Das Absperrventil kann sowohl manuell gestellt werden, als auch als gesteuertes Ventil ausgebildet sein. Denkbar ist selbstverständlich auch ein gesteuertes Ventil, welches zusätzlich manuell verstellt werden kann (insbesondere manueller Override).

Weiterhin wird vorgeschlagen, dass der Kalorimeterbehälter eine den Kalorimeterschacht umgebende Bleiabschirmung aufweist. Eine derartige Bleiabschirmung kann insbesondere als thermisches Gamma-Strahlungsumwandlungsmittel verwendet werden, wie weiter oben bereits erwähnt. Mit einer derartigen Bauweise ist es insbesondere möglich, dass auch die Nachzerfallsleistung aufgrund von entstehender Gamma-Strahlung mit ausreichender Genauigkeit und/oder in ausreichendem Masse erfolgen kann.

Ferner kann es vorgesehen sein, dass der Kalorimeterbehälter zum Durchleiten von Kühlmittel auf der Aussenseite der Bleiabschirmung/Gamma-Strahlungsumwandlungsmittel einen die Bleiabschirmung/Gamma-Strahlungsumwandlungsmittel umgebenen Kühlmittelkanal aufweist, der zumindest Teil einer Strömungsverbindung zwischen dem Kühlmittel-Einlass und dem Kühlmittel-Auslass durch den Kalorimeterbehälter bildet. Der Kühlmittelkanal kann beispielsweise durch den Zwischenraum zwischen der Aussenseite der Bleiabschirmung/Gamma-Strahlungsumwandlungsmittel und der Innenseite einer Aussenhülle des Kalorimeterbehälters gebildet sein. In dieser Konfiguration kann die Vorrichtung - wie weiter oben bereits beschrieben - insbesondere eine obere Einlassöffnung aufweisen, die vorzugsweise unterhalb des Kühlmittel-Auslasses angeordnet ist. Von der oberen Einlassöffnung kann Kühlmittel oben in den Kalorimeterbehälter eingebracht und auf der Aussenseite der das Brennelement ummantelnden Bleiabschirmung/Gamma-Strahlungsumwandlungsmittel (aber innerhalb einer Aussenhülle des Kalorimeterbehälters) durch den Kühlmittelkanal nach unten in Richtung des (vorzugsweise geschlossenen) Bodens des Kalorimeterschachts geführt wird. Von dort kann das Kühlmittel sodann auf der Innenseite bzw. innerhalb der Bleiabschirmung/Gamma-Strahlungsumwandlungsmittel im Kalorimeterschacht - entlang des Brennelements - nach oben in Richtung Kühlmittel-Auslass strömen. Auf diese Weise kann das Kühlmittel vorteilhafterweise derart geleitet werden, dass ein möglichst effizienter thermischer Energieeintrag aus dem Bleimantel/Gamma-Strahlungsumwandlungsmittel in das Kühlmittel erfolgen kann, sodass alle Aspekte der Nachzerfallsleistung des zu vermessenen Brennelements im Rahmen einer Messung berücksichtigt werden können. Hierdurch kann die Messgenauigkeit der vorgeschlagenen Vorrichtung nochmals erhöht werden.

### BESCHREIBUNG DER ZEICHNUNGEN

Weitere vorteilhafte Aspekte der Erfindung ergeben sich aus der folgenden Beschreibung von Ausführungsbeispielen der Erfindung unter Bezugnahme auf die Figuren, welche zeigen:
- Fig. 1: einen schematischen, vereinfachten Schaltplan einer beispielhaften Ausführungsform der erfindungsgemässen Vorrichtung zur kalorimetrischen Bestimmung der Nachzerfallsleistung von Brennelementen;
- Fig. 2: einen Detailausschnitt der in Fig. 1 gezeigten Vorrichtung zur Erläuterung der Messinstrumentierung;
- Fig. 3: die in Fig. 1 gezeigte Vorrichtung in einer Betriebsstellung;
- Fig. 4: die in Fig. 1 gezeigte Vorrichtung in einer Befüllungsstellung;
- Fig. 5: die in Fig. 1 gezeigte Vorrichtung in einer Entleerungsstellung;
- Fig. 6: ein Ausführungsbeispiel eines Kalorimeterbehälters in einer ersten, möglichen Anschlussstellung in schematischer Seitenansicht; und
- Fig. 7: das in Fig. 6 gezeigte Ausführungsbeispiel eines Kalorimeterbehälters in einer zweiten, möglichen Anschlussstellung in schematischer Seitenansicht.

### DETAILLIERTES AUSFÜHRUNGSBEISPIEL

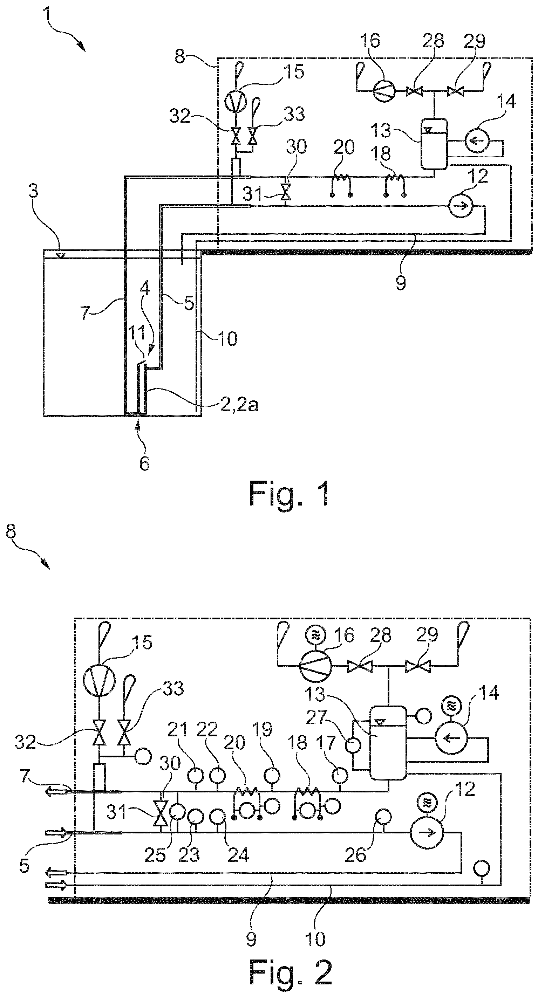

Fig. 1 zeigt in vereinfachter und schematischer Form den Schaltplan einer beispielhaften Ausführungsform der erfindungsgemässen Vorrichtung 1 zur kalorimetrischen Bestimmung der Nachzerfallsleistung von Brennelementen. Die Vorrichtung 1 weist einen Kalorimeterbehälter 2 mit einem vertikalen Kalorimeterschacht 2a auf, der zur Messung der Nachzerfallsleistung von im Kalorimeterschacht 2a eingebrachten Brennelementen (nicht dargestellt) in einem Kühlmittelbecken 3, beispielsweise einem Abklingbecken oder Kühlmittelbecken eines Nasslagers für Brennelemente, platziert ist. Der Kalorimeterbehälter 2 weist vorzugsweise eine im Wesentlichen zylindrische Form auf. Im Querschnitt senkrecht zur Vertikalen kann der Kalorimeterbehälter 2, insbesondere der Kalorimeterschacht 2a eine (kreis)runde oder rechteckige, insbesondere quadratische Form aufweisen. Der Kalorimeterschacht 2a weist an einem oberen Ende 37 eine obere Schachtöffnung zum Einbringen bzw. Entnehmen des Brennelements in den bzw. aus dem Kalorimeterschacht 2a auf. Der Kalorimeterschacht 2a verfügt zudem über einen Verschlussdeckel 11, welcher zum reversiblen Verschliessen der oberen Schachtöffnung dient. Der Kalorimeterbehälter 2 befindet sich im unteren Abschnitt eines Beladebereich des Kühlmittelbeckens 3 in einer Tiefe, die ausreichend, dass der Abstand zwischen dem oberen Ende des Kalorimeterschachts 2a und dem Wasserpegel des Kühlmittelbeckens 3 grösser ist als die Länge des zu vermessenden Brennelements, so dass das Brennelement stets vollständig mit Kühlmittel überdeckt ist, wenn es über die obere Schachtöffnung in den Kalorimeterschacht 2a eingebracht bzw. aus dem Kalorimeterschacht 2a entnommen wird. Der Abstand zwischen dem oberen Ende des Kalorimeterschachts 2a und dem Wasserpegel des Kühlmittelbeckens 3 kann beispielswiese 7 m betragen.

Der Kalorimeterbehälter 2 ist über eine Kühlmittel-Entnahmeleitung 5 sowie über eine Kühlmittel-Zufuhrleitung 7 in Fluidverbindung mit einer Messstations-Einheit 8, wobei die Kühlmittel-Entnahmeleitung 5 ist an einem Kühlmittel-Auslass 4 am oberen Ende des Kalorimeterschachts 2a und die Kühlmittel-Zufuhrleitung 7 an einem Kühlmittel-Einlass 6 am unteren Ende des Kalorimeterschachts 2a angeschlossen ist. Weiterhin ist zwischen dem Kühlmittelbecken 3 und der Messstations-Einheit 8 eine Fluidverbindung in Form einer Kühlmittel-Rückführleitung 9 sowie einer Kühlmittel-Ansaugleitung 10 vorgesehen. Wie aus Fig. 1 ersichtlich ist die Messstations-Einheit 8 ausser des Kühlmittelbeckens 3 angeordnet.

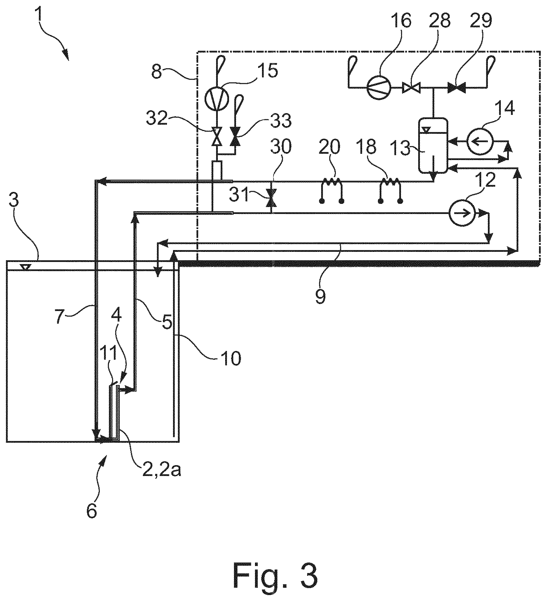

Aus darstellungstechnischen Gründen ist der Aufbau der Messstations-Einheit 8 in Fig. 1 nur teilweise dargestellt. Weitere Details sind in Fig. 2 eingezeichnet. Die in Fig. 1 gezeigte Messstations-Einheit 8 weist jedoch beim vorliegend dargestellten Ausführungsbeispiel der Vorrichtung 1 eine identische Instrumentierung und auch ansonsten den gleichen Aufbau wie die in Fig. 2 gezeigte Messstations-Einheit 8 auf. Das gleiche gilt im Übrigen auch für die schematischen Darstellungen der unterschiedlichen Betriebszustände der Vorrichtung 1, die in den Figs. 3, 4 und 5 gezeigt sind.

Die Messstations-Einheit 8 verfügt beim vorliegenden Ausführungsbeispiel über alle für die Förderung des als Wärmeträger dienenden Kühlmittels und alle für die Messung der Nachzerfallsleistung der Brennelemente notwendigen Komponenten. Somit ist es nicht erforderlich, dass Sensoren oder anderweitige, elektrisch betriebene Komponenten im Kühlmittelbecken 3 unter Wasser angeordnet werden müssen. Auch kann vermieden werden, dass Messeinrichtungen/Sensoren einer erhöhten Strahlungsdosis ausgesetzt werden.

Die Förderung des als Wärmeträger dienen Kühlmittels - vorliegend im Wesentlichen Wasser - erfolgt über eine als Kreiselpumpe ausgebildete Förderpumpe 12. Die Förderpumpe 12 ist im vorliegend dargestellten Ausführungsbeispiel mit einer Drehzahlregelung durch einen Frequenzumrichter ausgestattet. Im Betrieb wird Kühlmittel mittels der Förderpumpe 12 über die Kühlmittel-Entnahmeleitung 5 aus dem Kalorimeterschacht 2a angesaugt. Das angesaugte Kühlmittel wird an der Ausgangsseite der Förderpumpe 12 über die Kühlmittel-Rückführleitung 9 zurück in das Kühlmittelbecken 3 gefördert.

Im Betrieb der Förderpumpe 12 entsteht bei geschlossenen Verschlussdeckel 11 im Kalorimeterschacht 2a ein leichter Unterdruck, der den Verschlussdeckel 11 im Betriebszustand der Vorrichtung 1 (siehe auch Fig. 3) in seiner reversiblen Verschlussstellung hält. Dementsprechend führt der im Kalorimeterschacht 2a erzeugte Unterdruck zu einem Ansagen von Fluid durch die Kühlmittel-Zufuhrleitung 7 in den Kalorimeterschacht 2a hinein. Die Kühlmittel-Zufuhrleitung 7 wiederum saugt das Kühlmittel aus einem in der Messstations-Einheit 8 vorgesehenen Mischbehälter 13 an, der bis zu einem vorgesehenen Füllstand mit Kühlmittel gefüllt ist. Der Mischbehälter 13 bezieht das Kühlmittel über eine Kühlmittel-Ansaugleitung 10 aus dem Kühlmittelbehälter 3.

Eine Umwälzpumpe 14 ist fluidisch mit dem Mischbehälter 13 verbunden. Die Umwälzpumpe 14 dient einer guten Durchmischung des im Mischbehälter 13 befindlichen Kühlmittels, sodass es im Mischbehälter 13 zu keiner Temperaturschichtung kommt. Die Umwälzpumpe 14 ist im vorliegend dargestellten Ausführungsbeispiel ebenfalls als Kreiselpumpe ausgebildet und mittels eines Frequenzumrichters mit einer Drehzahlregelung versehen.

Weiterhin sind in der Messstations-Einheit 8 eine erste und eine zweite Vakuumpumpeneinrichtungen 15, 16 vorgesehen. Die erste Vakuumpumpeneinrichtung 15 dient der Evakuierung eines Zwischenraums zwischen benachbart zueinander ausgebildeten inneren und äusseren Wandungen des Kalorimeterbehälters 2 sowie entsprechenden inneren und äusseren Wandungen der bereichsweise doppelwandig ausgebildeten Kühlmittel-Entnahmeleitung 5 und Kühlmittel-Zufuhrleitung 7 (jeweils durch doppelte Linien in den Figs. 1 bis 5 angedeutet). Das derart erzeugte Vakuum bewirkt eine Vakuumisolierung des Kalorimeterbehälters 2 sowie der doppelwandig ausgebildeten Bereich der Kühlmittel-Entnahmeleitung 5 und Kühlmittel-Zufuhrleitung 7. Hierdurch wird mit hoher Isolationsgüte ein Wärmeübergang zwischen dem Kühlmittel, welches sich in der Kühlmittel-Entnahmeleitung 5, der Kühlmittel-Zufuhrleitung 7 und innerhalb des Kalorimeterbehälters 2 befindet, und dem umgebenden Medium (Kühlmittel, vorliegend im Wesentlichen Wasser) im Kühlmittelbecken 3 wirksam verringert. In vorteilhafter Weise kann so die Genauigkeit der kalorimetrischen Messung signifikant verbessert werden. In diesem Zusammenhang ist darauf hinzuweisen, dass die ausserhalb der Messstations-Einheit 8 befindlichen Teile der Kühlmittel-Entnahmeleitung 5 sowie der Kühlmittel-Zufuhrleitung 7 eine erhebliche Länge aufweisen, und darüber hinaus durch den Aussenkontakt mit dem flüssigen Medium (Wasser im Kühlmittelbecken 3) potenziell einen hohen Wärmeeintrag bzw. einen hohen Wärmeverlust aufweisen können. Entsprechendes gilt für den Kalorimeterbehälter 2.

Nach dem Einbringen eines Brennelements in den Kalorimeterschacht 2a ist zu Beginn einer Messung die obere Schachtöffnung mit dem Verschlussdeckel 11 zu verschliessen. Hierzu kann der Verschlussdeckel 11 mithilfe eines hier nicht näher dargestellten Werkzeugs in seine reversible Verschlussstellung gebracht werden muss, bevor dieser aufgrund des von der Förderpumpe 12 induzierten Unterdrucks in dieser reversiblen Verschlussstellung gehalten wird. Der Verschlussdeckel 11 ist derart ausgebildet, dass er eine mittlere Dichte von weniger als 990 kg/cm³ aufweist. Hierdurch weist der Deckel eine geringere Dichte als das umgebende Medium (Wasser im Kühlmittelbecken 3) auf. Bei einem Ausfall der Förderpumpe 12 (bzw. wenn diese abgeschaltet wird) hebt sich somit der Verschlussdeckel 11 selbsttätig von seiner verschliessenden Position an der oberen Schachtöffnung ab (Verschlussdeckel 11 schwimmt auf), sodass sich der Kalorimeterschacht 2a zum Kühlmittelbecken 3 hin öffnet. Aufgrund natürlicher Konvektion erfolgt sodann eine automatische Kühlung des sich im Kalorimeterschacht 2a befindlichen Brennelements, was unter Fail-Safe-Aspekten besonders wünschenswert ist.

Die kalorimetrische Bestimmung der Nachzerfallsleistung erfolgt im Wesentlichen durch Bestimmung der Temperaturerhöhung des Kühlmittels beim Durchströmen des Kalorimeterbehälters entlang des Brennelements, wobei die Temperaturerhöhung mit der Durchflussmenge des Kühlmittels in Relation gesetzt wird. Dieses Messprinzip ist als solche im Stand der Technik bekannt. Dabei wird die Temperaturerhöhung des Kühlmittels mittels einer ersten Temperatur-Messeinrichtung 21 am Kühlmittel-Einlass 6 oder in der Kühlmittel-Zufuhrleitung 7 und einer zweiten Temperatur-Messeinrichtung 23 am Kühlmittel-Auslass 4 erfasst. Die Durchflussmenge kann durch zumindest eine Durchfluss-Messeinrichtung 24 am Kühlmittel-Auslass 4 und/oder in der Kühlmittel-Entnahmeleitung 5 bestimmt werden.

Zur Durchführung der eigentlichen kalorimetrischen Messung sind in der Messstations-Einheit 8 zudem weitere Messeinrichtungen/Sensoren und Vorrichtungen vorgesehen. So sind zur Erhöhung der Messgenauigkeit der Vorrichtung 1 Temperiereinrichtungen 18, 20 zum Heizen oder Kühlen des in den Kalorimeterschacht 2a zuzuführenden Kühlmittels vorgesehen, mittels denen das Kühlmittel in wohl definierter Weise (vor)temperiert werden kann, bevor es über die Kühlmittel-Zufuhrleitung 7 dem Kalorimeterschacht 2a zugeführt wird. Die grundsätzliche Anordnung dieser Temperiereinrichtungen 18, 20 sind in Fig. 1 und Fig. 2 gezeigt. Die entsprechende Durchströmung der Vorrichtung 1 mit Kühlmittel in der Messstellung ist ergänzend aus Fig. 3 ersichtlich. Das aus dem Mischbehälter 13 entnommene Kühlmittel wird zunächst einer ersten Vorlauftemperatur-Messeinrichtung 17 zugeführt. Basierend auf dem Messwert der ersten Vorlauftemperatur-Messeinrichtung 17 (sowie dem Temperatur-Zielwert) wird das Kühlmittel in einer ersten Temperiereinrichtung 18 durch Heizen oder Kühlen auf eine höhere oder niedrigere Temperatur verbracht. Die Temperatur des derart erwärmten bzw. abgekühlten Kühlmittels wird in einer zweiten Vorlauftemperatur-Messeinrichtung 19 gemessen. Basierend auf dem zweiten Vorlauftemperaturmesswert erfolgt ein weiteres Erwärmen oder Abkühlen des Kühlmittels in der zweiten Temperiereinrichtung 20. Üblicherweise wird dabei die Temperierung des Kühlmittels derart erfolgen, dass in der ersten Temperiereinrichtung 18 ein grösserer Temperierschritt erfolgt, wohingegen in der zweiten Temperiereinrichtung 20 ein geringerer Temperierschritt erfolgt, dieser jedoch mit einer grösseren Temperiergenauigkeit. Obgleich es sich in der Regel so verhalten wird, dass die erste Temperiereinrichtung 18 und die zweite Temperiereinrichtung 20 in die "gleiche Richtung temperieren", also beide entweder Heizen oder beide Kühlen, ist es durchaus auch denkbar, dass eine Temperierung in unterschiedliche Richtungen erfolgt, also beispielsweise derart, dass die erste Temperiereinrichtung 18 das Kühlmittel abkühlt, wohingegen die zweite Temperiereinrichtung 20 das Kühlmittel erwärmt (oder umgekehrt). Zur Überprüfung der Funktion der ersten Temperiereinrichtung 18 sowie der zweiten Temperiereinrichtung 20 können weitere, hier nicht näher dargestellte Messinstrumente verwendet werden.

Das von der zweiten Temperiereinrichtung 20 temperierte Kühlmittel wird vor der Zuführung in die eigentliche Kühlmittel-Zufuhrleitung 7 nochmals vermessen, und zwar einerseits mittels einer ersten Temperatur-Messeinrichtung 21 hinsichtlich seiner Temperatur, sowie - wie bereits oben erwähnt - mittels einer ersten Durchfluss-Messeinrichtung 22 hinsichtlich seiner Durchflussmenge. Dabei kann zuerst die Temperaturmessung, und dann die Durchflussmessung erfolgen, oder, wie vorliegend dargestellt, zuerst die Durchflussmessung und dann die Temperaturmessung erfolgen).

Im Weiteren wird das zurückströmende Kühlmittel, nachdem es über die Kühlmittel-Zufuhrleitung 7, den Kalorimeterschacht 2a (wo es hauptsächlich durch die Nachzerfallsleistung des im Kalorimeterschacht 2a befindlichen Brennelements erwärmt wird) und die Kühlmittel-Entnahmeleitung 5 geströmt ist, erneut mittels einer zweiten Temperatur-Messeinrichtung 23 hinsichtlich seiner Temperatur, sowie mittels einer zweiten Durchfluss-Messeinrichtung 24 hinsichtlich seiner Durchflussmenge vermessen.

Aus dem Differenzmesswert der ersten Temperatur-Messeinrichtung 21 und der zweiten Temperatur-Messeinrichtung 23 kann die Temperaturerhöhung des Kühlmittels bestimmt werden. Aus dem Quotienten der Temperaturdifferenz und der Durchflussmenge des Kühlmittels wiederum kann die Wärmeleistung, und damit die Nachzerfallsleistung des im Kalorimeterschacht 2a befindlichen Brennelements bestimmt werden.

Die gemessene Durchflussmenge an der ersten Durchfluss-Messeinrichtung 22 und der zweiten Durchfluss-Messeinrichtung 24 sollte gleich sein. Weichen die Durchflussmengen voneinander ab, so ist dies ein Indiz dafür, dass der Verschlussdeckel 11 den Kalorimeterschacht 2a nicht korrekt verschliesst, oder eine anderweitige Leckage aufgetreten ist. In diesem Fall ist die Messung als unzuverlässig zu bewerten und in der Regel zu verwerfen.

Weiterhin ist zwischen der Kühlmittel-Entnahmeleitung 5 und der Kühlmittel-Zufuhrleitung 7 eine Druckdifferenz-Messeinrichtung 25 vorgesehen. Mit der Druckdifferenz-Messeinrichtung 25 können hydraulische Verluste in den Kühlmittelleitungen 5, 7 und im Kalorimeterschacht 2a bestimmt werden. Die Dissipation der hydraulischen Verluste erscheint zunächst als zusätzliche thermische Energie, und die gemessene Temperaturdifferenz zwischen der ersten Temperatur-Messeinrichtung 21 und der zweiten Temperatur-Messeinrichtung 23 ist somit zu hoch. Mithilfe der Druckdifferenz-Messeinrichtung 25 kann dieser Einflussfaktor rechnerisch korrigiert werden, und somit die Messgenauigkeit erhöht werden.

Ferner ist in Strömungsrichtung gesehen stromaufwärts kurz vor der Förderpumpe 12 ein Druckmesssensor 26 vorgesehen, der der Überwachung des Ansaugdrucks der Förderpumpe 12 dient. Ein entsprechender Unterdruck signalisiert den korrekten Sitz des Verschlussdeckels 11 auf dem Kalorimeterschacht 2a.

Zusätzlich erfolgt mit Hilfe einer Füllstands-Messeinrichtung 27 eine Kontrolle des Füllstands des im Mischbehälter 13 befindlichen Kühlmittels. Sollte der Füllstand absinken, so kann durch Einschalten der zweiten Vakuumpumpeneinrichtung 16 und Öffnen des Ansaugventils 28 zusätzliches Kühlmittel über die Kühlmittels-Ansaugleitung 10 aus dem Kühlmittelbecken 3 in den Mischbehälter 13 angesaugt werden. Ist der Füllstand dagegen zu hoch, kann durch Öffnen des Ablassventils 29 (Verbindung mit Umgebungsdruck) der Füllstand im Mischbehälter 13 abgesenkt werden.

In der in Fig. 3 visitierten Messstellung ist das Absperrventil 31 in der absperrbaren Verbindungsleitung 30, die die Kühlmittel-Entnahmeleitung 5 und die Kühlmittel-Zufuhrleitung 7 fluidisch miteinander verbindet, bzw. voneinander trennt, (siehe auch Fig. 3) geschlossen ist. Weiterhin ist in der Messstellung (siehe auch Fig. 3) die erste Vakuumpumpeneinrichtung 15 eingeschaltet und über das Evakuierungsventil 32 mit den evakuierbaren Zwischenräumen der doppelten Wandungen von Kühlmittel-Entnahmeleitung 5, Kühlmittel-Zufuhrleitung 7 und Kalorimeterschacht 2a verbunden, sodass hier ein isolierendes Vakuum erzeugt wird und aufrechterhalten wird.

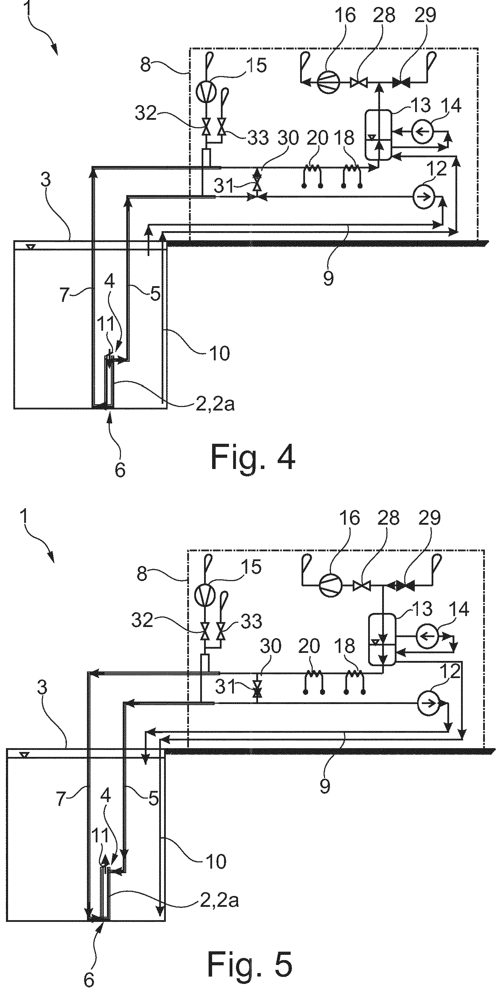

Während Fig. 3 die Messstellung sowie die in dieser Stellung vorherrschenden Strömungsrichtungen des Kühlmittels im Messbetrieb und die Reihenfolge, in der die unterschiedlichen Messeinrichtungen, Temperiereinrichtungen und sonstigen Einrichtungen in der Messstellung durchströmt werden, veranschaulicht, zeigt Fig. 4 in schematischer Weise die erfindungsgemsässe Vorrichtung 1 in einer Befüllungsstellung bzw. in einem Befüllungsmodus. In der Befüllungsstellung ist die erste Vakuumpumpeneinrichtung 15 eingeschaltet, und das Evakuierungsventil 32 ist geöffnet, sodass sich in den evakuierbaren Zwischenräumen von Kühlmittel-Entnahmeleitung 5, Kühlmittel-Zufuhrleitung 7 und Kalorimeterschacht 2a ein thermisch isolierendes Vakuum aufbauen kann.

Weiterhin ist die zweite Vakuumpumpeneinrichtung 16 eingeschaltet und das Ansaugventil 28 ist geöffnet. Dadurch kann der Füllstand im zunächst noch leeren Mischbehälter 13 auf die erforderliche Höhe gebracht werden.

Zu Beginn des Befüllungsmodus ist der Verschlussdeckel 11 des Kalorimeterschachts 2a zunächst noch offen, die Förderpumpe 12 ist ausgeschaltet, und das Absperrventil 31 der absperrbaren Verbindungsleitung 30 ist geöffnet. Hierdurch befüllt sich der Mischbehälter 13 über sämtliche Leitungen mit Kühlmittel, also über die Kühlmittel-Entnahmeleitung 5, die Kühlmittel-Zufuhrleitung 7, die Kühlmittel-Rückführleitung 9 und die Kühlmittel-Ansaugleitung 10. Dadurch werden die betreffenden Leitungen wirksam entlüftet. Weiterhin ist die Umwälzpumpe 14 eingeschaltet, um das bereits im Mischbehälter 13 befindliche Kühlmittel umzuwälzen und Temperaturgradienten im Mischbehälter 13 zu vermeiden.

Der Übergang in den in Fig. 3 gezeigten Messbetrieb erfolgt durch Schliessen des Verschlussdeckels 11 des Kalorimeterschachts 2a, Schliessen des Absperrventils 31 in der absperrbaren Verbindungsleitung 30 und Einschalten der Förderpumpe 12. Darüber hinaus sollte nach dem Erreichen eines ausreichenden Füllstandniveaus im Mischbehälter 13 das Ansaugventil 28 geschlossen werden und die zweite Vakuumpumpeneinrichtung 16 abgeschaltet werden.

Das Abschalten der Vorrichtung, etwa nach angeschlossener Messung der Nachzerfallsleistung eines Brennelements, erfolgt gemäss dem in Fig. 5 gezeigten Schema. Hierzu werden die erste Vakuumpumpeneinrichtung 15 und die zweite Vakuumpumpeneinrichtung 16 ausgeschaltet, das Evakuierungsventil 32 und das Ansaugventil 18 geschlossen, sowie das Belüftungsventil 33, das Ablassventil 29 und das Absperrventil 31 der absperrbaren Verbindungsleitung 30 geöffnet. Darüber hinaus werden die Umwälzpumpe 14 und die Förderpumpe 12 ausgeschaltet. In Folge dessen läuft das Kühlmittel über sämtliche Leitungen, also die Kühlmittel-Entnahmeleitung 5, die Kühlmittel-Zufuhrleitung 7, die Kühlmittel-Rückführleitung 9 und die Kühlmittel-Ansaugleitung 10 zurück in das Kühlmittelbecken 3. Da die Förderpumpe 12 ausgeschaltet ist, bricht der Unterdruck im Kalorimeterschacht 2a zusammen, und der Verschlussdeckel 11 öffnet sich selbsttätig.

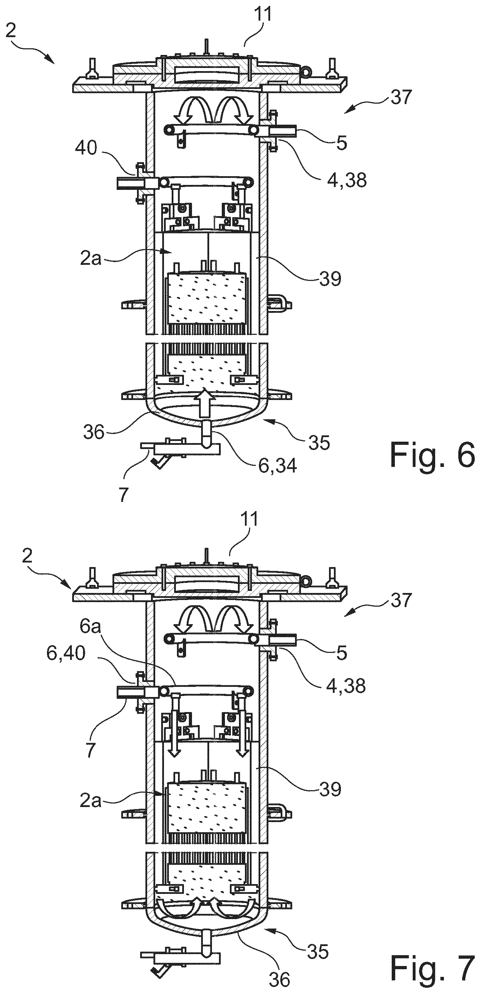

Fig. 6 und Fig. 7 zeigen jeweils unterschiedliche Varianten, wie Kühlmittel bei einem konkreten Ausführungsbeispiel der erfindungsgemässen Vorrichtung 1 durch den Kalorimeterbehälter 2 hindurchströmen kann. In beiden Varianten befindet sich der Verschlussdeckel 11 jeweils in Verschlussstellung auf der Schachtöffnung des Kalorimeterschachts 2a.

Gemäss Fig. 6 erfolgt die Zufuhr von Kühlmittel mittels der Kühlmittel-Zufuhrleitung 7 über einen unteren Einlassstutzen 34 am unteren Ende 35 des Kalorimeterbehälters 2, der einen Kühlmittel-Einlass 6 durch den ansonsten geschlossenen Boden 36 des Kalorimeterschachts 2a bildet. Am oberen Ende 37 des Kalorimeterschachts 2a ist ein als Kühlmittel-Auslass 4 dienender Auslassstutze 38 zur Entnahme des Kühlmittels vorgesehen. Wie in Fig. 6 gezeigt, weist der Kühlmittel-Auslass 4 weist zudem einen zumindest teilweise ringförmig ausgebildeten Rohrverteiler 4a auf, um eine weitgehend rotationssymmetrische Absaugung des Kühlmittels zu realisieren.

Ferner ist im Kalorimeterschacht 2a eine Bleiabschirmung 39 vorgesehen, die die im beladenen Zustand des Kalorimeterbehälters 2 das darin aufgenommenen Brennelement umgibt und als Gamma-Strahlungsumwandlungsmittel fungiert. Die Bleiabschirmung 39 weist im vorliegenden Ausführungsbeispiel eine Dicke von etwa 2 cm auf. Hierdurch wird ein erheblicher Anteil der vom Brennelement freigesetzten Gammastrahlung absorbiert und in Wärme umgesetzt. Im Betrieb strömt das über den Einlassstutzen 34 am unteren Ende 35 des Kalorimeterbehälters 2 eingebrachte Kühlmittel sowohl entlang der Aussenseite der Bleiabschirmung 39 als auch innerhalb der Bleiabschirmung 39 entlang des Brennelements in Richtung des Rohrverteilers 4a, von wo aus es sodann über den Auslassstutze 38 dem Kalorimeterbehälter 2 wieder entnommen wird. Hierdurch wird vom vorbeiströmenden Kühlmittel sowohl die von der Gammastrahlung erzeugte Wärme als auch die unmittelbar abgestrahlte thermische Leistung des Brennelements aufgenommen. Dementsprechend findet auch die freigesetzte Gamma-Nachzerfallsleistung des Brennelements Eingang in die kalorimetrische Messung der Vorrichtung 1.

Fig. 7 zeigt eine alternative Variante, wie das Kühlmittel den Kalorimeterschacht 2a durchströmen kann. Hierbei strömt das von der Kühlmittel-Zufuhrleitung 7 herangeführte Kühlmittel über einen als Kühlmittel-Einlass 6 dienenden oberen Einlassstutzen 40 in den Kalorimeterschacht 2a ein. Der obere Einlassstutzen 40 ist benachbart zum Auslassstutzen 38 angeordnet, diesem gegenüber jedoch nach unten versetzt. Ähnlich wieder der Kühlmittel-Auslass 4, weist auch der über den obere Einlassstutzen 40 realisierte Kühlmittel-Einlass 6 einen zumindest teilweise ringförmig ausgebildeten Rohrverteiler 6a auf, um eine weitgehend rotationssymmetrische Einspeisung des Kühlmittels zu erreichen. Wie durch die Pfeile angedeutet, strömt das Kühlmittel vom oberen Einlaufstutzen 40 bzw. Rohrverteiler 6a zunächst nach unten entlang der Aussenseite der Bleiabschirmung 39. Am unteren Ende 35 des Kalorimeterschachts 2a wird das Kühlmittel vom geschlossenen Boden 36 umgelenkt, von wo aus es anschliessend innerhalb der Bleiabschirmung 39 entlang des Brennelements nach oben in Richtung des Auslassstutzens 38 strömt. Die Strömungsrichtung des Kühlmittels ist dabei so gewählt, dass der nach unten gerichtete Strömungsweg (vom oberen Einlassstutzen 40 in Richtung des geschlossenen Bodens 36), sowie der nach oben gerichtete Strömungsweg (vom unteren Boden 36 in Richtung des Auslassstutzens 38) mittels der Bleiabschirmung 39 voneinander getrennt sind. Auch in dieser Variante wird vom vorbeiströmenden Kühlmittel sowohl die von der Gammastrahlung erzeugte Wärme als auch die unmittelbar abgestrahlte thermische Leistung des Brennelements aufgenommen. Mit der in Fig. 7 gewählten Strömungsanordnung kann jedoch eine bessere Wärmeabfuhr der Bleiabschirmung 39 realisiert und auf diese Weise die Messgenauigkeit erhöht werden.

Da der Kalorimeterbehälter 2 gemäss Fig. 6 und Fig. 7 sowohl einen unteren Einlassstutzen 34 als auch einen oberen Einlaufstutzen 40 aufweist, können in vorteilhafter Weise mit diesem Kalorimeterbehälter 2 wahlweise beide zuvor beschriebenen Strömungsanordnungen realisiert werden.

## Patentansprüche

1. Vorrichtung (1) zur kalorimetrischen Bestimmung der Nachzerfallsleistung von Brennelementen, aufweisend:
- einen zur Anordnung in einem Kühlmittelbecken (3) geeigneten Kalorimeterbehälter (2) mit einem vertikalen Kalorimeterschacht (2a) zur Aufnahme eines Brennelements, mit wenigstens einem Kühlmittel-Einlass (6, 34, 40) zum Zuführen von Kühlmittel in den Kalorimeterschacht (2a) und mit wenigstens einem Kühlmittel-Auslass (4, 38) zum Entnehmen von Kühlmittel aus dem Kalorimeterschacht (2a), wobei der Kalorimeterschacht (2a) an einem oberen Ende (37) eine obere Schachtöffnung zum Einbringen bzw. Entnehmen des Brennelements in den bzw. aus dem Kalorimeterschacht (2a) aufweist;
- ein Leitungssystem aufweisend wenigstens eine mit dem Kühlmittel-Auslass (4, 38) verbundene Kühlmittel-Entnahmeleitung (5) und vorzugsweise eine mit dem Kühlmittel-Einlass (6, 34, 40) verbundene Kühlmittel-Zufuhrleitung (7);
- eine eingangsseitig mit der Kühlmittel-Entnahmeleitung (5) verbundene Förderpumpe (12) zum Erzeugen eines Kühlmittelstroms durch den Kalorimeterschacht (2a) entlang des Brennelements und zum Entnehmen von Kühlmittel aus dem Kalorimeterschacht (2a) über den Kühlmittel-Auslass (4, 38) und die Kühlmittel-Entnahmeleitung (5);
- eine Durchfluss-Messeinrichtung (24) am Kühlmittel-Auslass (4, 38) oder in der Kühlmittel-Entnahmeleitung (5) zum Bestimmen der im Betrieb aus dem Kalorimeterschacht (2a) entnommenen Kühlmittelmenge;
- eine erste Temperatur-Messeinrichtung (21) am Kühlmittel-Einlass (6, 34, 40) oder - soweit vorhanden - in der Kühlmittel-Zufuhrleitung (7) zum Bestimmen der Temperatur des im Betrieb in den Kalorimeterschacht (2a) zugeführten Kühlmittels;
- eine zweite Temperatur-Messeinrichtung (23) am Kühlmittel-Auslass (4, 38) oder in der Kühlmittel-Entnahmeleitung (5) zum Bestimmen der Temperatur des im Betrieb aus dem Kalorimeterschacht (2a) entnommenen Kühlmittels;
- einen Verschlussdeckel (11) zum reversiblen Verschliessen der oberen Schachtöffnung, wobei der Verschlussdeckel (11) im Betrieb durch den von der Förderpumpe (12) im Kalorimeterschacht (2a) gegenüber der Umgebung erzeugten Unterdruck dichtend auf der oberen Schachtöffnung gehalten wird.

2. Vorrichtung (1) nach Anspruch 1, wobei die mittlere Dichte des Verschlussdeckels (11) kleiner ist als 990 kg/m³.

3. Vorrichtung (1) nach einem der vorherigen Ansprüche, wobei der Kühlmittel-Auslass (4, 38) am oberen Ende (37) des Kalorimeterschachts (2a) unterhalb der oberen Schachtöffnung anordnet ist.

4. Vorrichtung (1) nach einem der vorherigen Ansprüche, wobei der Kalorimeterschacht (2a) zur Realisierung des Kühlmittel-Auslasses (4, 38) vorzugsweise eine Auslassöffnung, insbesondere einen Auslassstutzen (4, 38), am oberen Ende (37) des Kalorimeterschachts (2a) unterhalb der oberen Schachtöffnung aufweist.

5. Vorrichtung (1) nach einem der Ansprüche 1 bis 4, wobei der Kalorimeterschacht (2a) zur Realisierung des wenigstens einen Kühlmittel-Einlasses (6, 34) an einem unteren Ende (35) offen ist.

6. Vorrichtung (1) nach einem der Ansprüche 1 bis 4, wobei der Kalorimeterschacht (2a) an einem unteren Ende einen geschlossenen Boden (36) aufweist und der Kalorimeterbehälter (2) zur Realisierung des wenigstens einen Kühlmittel-Einlasses (6, 34, 40) eine obere Einlassöffnung, insbesondere einen oberen Einlassstutzen (40), am oberen Ende (37) des Kalorimeterschachts (2a) unterhalb des Kühlmittel-Auslasses (4, 38) und/oder eine untere Einlassöffnung, insbesondere einen unteren Einlassstutzen (6, 34), an einem unteren Ende (35) des Kalorimeterschachts (2a), insbesondere am geschlossenen Boden (36), aufweist.

7. Vorrichtung (1) nach einem der vorherigen Ansprüche, wobei der Kalorimeterbehälter (2), die Kühlmittel-Entnahmeleitung (5) - zumindest zwischen dem Kühlmittel-Auslass (4, 38) und der zweiten Temperatur-Messeinrichtung (23) - und, soweit vorhanden, die Kühlmittel-Zufuhrleitung (7) - zumindest zwischen dem Kühlmittel-Einlass (6, 34, 40) und der ersten Temperatur-Messeinrichtung (21) - thermisch isoliert sind, vorzugsweise mittels einer Vakuumisolation.

8. Vorrichtung (1) nach Anspruch 7, wobei der Kalorimeterbehälter (2), die Kühlmittel-Entnahmeleitung (5) - zumindest zwischen dem Kühlmittel-Auslass (4, 38) und der zweiten Temperatur-Messeinrichtung (23) - und, soweit vorhanden, die Kühlmittel-Zufuhrleitung (7) - zumindest zwischen dem Kühlmittel-Einlass (6, 34, 40) und der ersten Temperatur-Messeinrichtung (21) - zur Realisierung der Vakuumisolation doppelwandig mit einer inneren Wandung und einer die innere Wandung umgebenden äusseren Wandung ausgebildet sind, wobei zwischen der inneren Wandung und der äusseren Wandung ein evakuierbarer Zwischenraum gebildet ist.

9. Vorrichtung (1) nach Anspruch 8, ferner aufweisend eine erste Vakuumpumpeneinrichtung (15) zum Erzeugen eines Vakuums im evakuierbaren Zwischenraum.

10. Vorrichtung (1) nach einem der vorherigen Ansprüche, wobei das Leitungssystem ferner eine Kühlmittel-Rückführleitung (10) aufweist, wobei ein stromaufwärts gelegenes Ende der Kühlmittel-Rückführleitung (10) ausgangsseitig mit der Förderpumpe (12) verbunden ist, und wobei ein stromabwärts gelegenes Ende der Kühlmittel-Rückführleitung (10) zum Rückführen von Kühlmittel im Kühlmittelbecken (3) anordenbar ist.

11. Vorrichtung (1) nach einem der vorherigen Ansprüche, ferner aufweisend eine Kühlmittel-Thermostatiereinrichtung (18, 20) zur Thermostatierung des in den Kalorimeterschacht (2a) zuzuführenden Kühlmittels, wobei die Kühlmittel-Thermostatiereinrichtung (18, 20) einen Mischbehälter (13) oder eine Mischstrecke, der mit einem stromaufwärts gelegenen Ende der Kühlmittel-Zufuhrleitung (7) verbunden ist, und bei Bedarf eine Umwälzpumpe (14) zum Umwälzen von Kühlmittel im Mischbehälter (13) oder der Mischstrecke aufweist.

12. Vorrichtung (1) nach Anspruch 11, wobei das Leitungssystem ferner eine Kühlmittel-Ansaugleitung (9) aufweist, wobei ein stromabwärts gelegenes Ende der Kühlmittel-Ansaugleitung in (9) den Mischbehälter (13) oder die Mischstrecke mündet, und wobei ein stromaufwärts gelegenes Ende der Kühlmittel-Ansaugleitung (9) zum Ansaugen von Kühlmittel im Kühlmittelbecken (3) anordenbar ist.

13. Vorrichtung (1) nach einem der Ansprüche 11 oder 12, wobei die Kühlmittel-Thermostatiereinrichtung (18, 20) wenigstens eine erste Temperiereinrichtung (18) zum Heizen oder Kühlen des in den Kalorimeterschacht (2a) zuzuführenden Kühlmittels aufweist, wobei die erste Temperiereinrichtung (18) in einem Abschnitt zwischen dem Mischbehälter (13) oder der Mischstrecke und der ersten Temperatur-Messeinrichtung (18) in der oder um die Kühlmittel-Zufuhrleitung (7) angeordnet ist.

14. Vorrichtung (1) nach Anspruch 13, wobei die Kühlmittel-Thermostatiereinrichtung (18, 20) eine zweite Temperiereinrichtung (20) zum Heizen oder Kühlen des in den Kalorimeterschacht (2a) zuzuführenden Kühlmittels aufweist, wobei die zweite Temperiereinrichtung (20) zum Heizen oder Kühlen in einem Abschnitt zwischen der ersten Temperiereinrichtung (18) zum Heizen oder Kühlen und der ersten Temperatur-Messeinrichtung (21) in der oder um die Kühlmittel-Zufuhrleitung (7) angeordnet ist.

15. Vorrichtung (1) nach einem der vorherigen Ansprüche, ferner aufweisend eine zweite Vakuumpumpeneinrichtung (16) zum Unterdruck-Befüllen des Leitungssystems und - soweit vorhanden - des Mischbehälters (13) oder der Mischstrecke mit Kühlmittel.

16. Vorrichtung (1) nach Anspruch 15, wobei die zweite Vakuumpumpeneinrichtung (16) zum Erzeugen eines Unterdrucks im Mischbehälter (13) oder der Mischstrecke und dem damit verbundenen Leitungssystem direkt mit dem Mischbehälter (13) oder der Mischstrecke verbunden ist.

17. Vorrichtung (1) nach einem der vorherigen Ansprüche, wobei das Leitungssystem eine absperrbare Verbindungsleitung (31) zwischen der Kühlmittel-Entnahmeleitung (5) und der Kühlmittel-Zufuhrleitung (7) aufweist.

18. Vorrichtung (1) nach einem der vorherigen Ansprüche, wobei der Kalorimeterbehälter (2) eine den Kalorimeterschacht (2a) umgebende Bleiabschirmung (39) aufweist, die vorzugsweise als Gamma-Strahlungsumwandlungsmittel dient.

19. Vorrichtung (1) nach einem Anspruch 18, wobei der Kalorimeterbehälter (2) zum Durchleiten von Kühlmittel auf der Aussenseite der Bleiabschirmung (39) einen die Bleiabschirmung (39) umgebenden Kühlmittelkanal aufweist, der zumindest Teil einer Strömungsverbindung zwischen dem Kühlmittel-Einlass (34, 40) und dem Kühlmittel-Auslass (4, 38) bildet.

## Claims

1. Device (1) for calorimetric determination of the decay heat power of fuel elements, having:
- a calorimeter container (2) suitable for arrangement in a coolant pool (3), having a vertical calorimeter shaft (2a) for receiving a fuel element, having at least one coolant inlet (6, 34, 40) for supplying coolant to the calorimeter shaft (2a), and having at least one coolant outlet (4, 38) for removing coolant from the calorimeter shaft (2a), wherein the calorimeter shaft (2a) has at an upper end (37) an upper shaft opening for the introduction and removal of the fuel element into and from the calorimeter shaft (2a);
- a line system having at least one coolant removal line (5) connected to the coolant outlet (4, 38), and preferably a coolant supply line (7) connected to the coolant inlet (6, 34, 40);
- a feed pump (12), connected on the input side to the coolant removal line (5), for generating a flow of coolant through the calorimeter shaft (2a) along the fuel element and for removing coolant from the calorimeter shaft (2a) *via* the coolant outlet (4, 38) and the coolant removal line (5);
- a flow measuring device (24) at the coolant outlet (4, 38) or in the coolant removal line (5) for determining the amount of coolant removed from the calorimeter shaft (2a) during operation;
- a first temperature measuring device (21) at the coolant inlet (6, 34, 40) or - where present - in the coolant supply line (7) for determining the temperature of the coolant supplied to the calorimeter shaft (2a) during operation;
- a second temperature measuring device (23) at the coolant outlet (4, 38) or in the coolant removal line (5) for determining the temperature of the coolant removed from the calorimeter shaft (2a) during operation;
- a closing cover (11) for reversibly closing the upper shaft opening, wherein the closing cover (11) is maintained in a sealing manner on the upper shaft opening during operation by the negative pressure relative to the environment that is generated in the calorimeter shaft (2a) by the feed pump (12).

2. Device (1) according to claim 1, wherein the mean density of the closing cover (11) is less than 990 kg/m³.

3. Device (1) according to any one of the preceding claims, wherein the coolant outlet (4, 38) is arranged at the upper end (37) of the calorimeter shaft (2a) below the upper shaft opening.

4. Device (1) according to any one of the preceding claims, wherein, for implementing the coolant outlet (4, 38), the calorimeter shaft (2a) preferably has an outlet opening, especially an outlet port (4, 38), at the upper end (37) of the calorimeter shaft (2a) below the upper shaft opening.

5. Device (1) according to any one of claims 1 to 4, wherein, for implementing the at least one coolant inlet (6, 34), the calorimeter shaft (2a) is open at a lower end (35).

6. Device (1) according to any one of claims 1 to 4, wherein the calorimeter shaft (2a) has a closed base (36) at a lower end and the calorimeter container (2), for implementing the at least one coolant inlet (6, 34, 40), has an upper inlet opening, especially an upper inlet port (40), at the upper end (37) of the calorimeter shaft (2a) below the coolant outlet (4, 38) and/or a lower inlet opening, especially a lower inlet port (6, 34), at a lower end (35) of the calorimeter shaft (2a), especially at the closed base (36).

7. Device (1) according to any one of the preceding claims, wherein the calorimeter container (2), the coolant removal line (5) - at least between the coolant outlet (4, 38) and the second temperature measuring device (23) - and, where present, the coolant supply line (7) - at least between the coolant inlet (6, 34, 40) and the first temperature measuring device (21) - are thermally insulated, preferably by means of vacuum insulation.

8. Device (1) according to claim 7, wherein the calorimeter container (2), the coolant removal line (5) - at least between the coolant outlet (4, 38) and the second temperature measuring device (23) - and, where present, the coolant supply line (7) - at least between the coolant inlet (6, 34, 40) and the first temperature- measuring device (21) - for implementing the vacuum insulation, are of double-walled form with an inner wall and an outer wall surrounding the inner wall, wherein an evacuable intermediate space is formed between the inner wall and the outer wall.

9. Device (1) according to claim 8, further having a first vacuum pump device (15) for generating a vacuum in the evacuable intermediate space.

10. Device (1) according to any one of the preceding claims, wherein the line system further has a coolant recycling line (10), wherein an upstream end of the coolant recycling line (10) is connected on the output side to the feed pump (12), and wherein a downstream end of the coolant recycling line (10) can be arranged in the coolant pool (3) for the recycling of coolant.

11. Device (1) according to any one of the preceding claims, further having a coolant temperature regulation device (18, 20) for regulating the temperature of the coolant to be supplied to the calorimeter shaft (2a), wherein the coolant temperature regulation device (18, 20) has a mixing container (13) or a mixing section, which is connected to an upstream end of the coolant supply line (7), and, if required, a recirculation pump (14) for recirculating coolant in the mixing container (13) or in the mixing section.

12. Device (1) according to claim 11, wherein the line system further has a coolant intake line (9), wherein a downstream end of the coolant intake line (9) opens into the mixing container (13) or the mixing section, and wherein an upstream end of the coolant intake line (9) can be arranged in the coolant pool (3) for the suctioning of coolant.

13. Device (1) according to either claim 11 or claim 12, wherein the coolant temperature regulation device (18, 20) has at least a first temperature control device (18) for heating or cooling the coolant to be supplied to the calorimeter shaft (2a), wherein the first temperature control device (18) is arranged in or around the coolant supply line (7) in a portion between the mixing container (13) or the mixing section and the first temperature measuring device (18).

14. Device (1) according to claim 13, wherein the coolant temperature regulation device (18, 20) has a second temperature control device (20) for heating or cooling the coolant to be supplied to the calorimeter shaft (2a), wherein the second temperature control device (20) for heating or cooling is arranged in or around the coolant supply line (7) in a portion between the first temperature control device (18) for heating or cooling and the first temperature measuring device (21).

15. Device (1) according to any one of the preceding claims, further having a second vacuum pump device (16) for filling the line system and - where present - the mixing container (13) or the mixing section with coolant under negative pressure.

16. Device (1) according to claim 15, wherein the second vacuum pump device (16) for generating a negative pressure in the mixing container (13) or the mixing section and in the line system connected thereto is connected directly to the mixing container (13) or the mixing section.

17. Device (1) according to any one of the preceding claims, wherein the line system has a connecting line (31) between the coolant removal line (5) and the coolant supply line (7) that can be shut off.

18. Device (1) according to any one of the preceding claims, wherein the calorimeter container (2) has a lead shielding (39) surrounding the calorimeter shaft (2a), which lead shielding preferably serves as a gamma radiation conversion means.

19. Device (1) according to claim 18, wherein the calorimeter container (2) has on the outer side of the lead shielding (39), for the passage of coolant, a coolant channel surrounding the lead shielding (39), which coolant channel forms at least part of a flow connection between the coolant inlet (34, 40) and the coolant outlet (4, 38).

## Revendications

1. Dispositif (1) de détermination calorimétrique de la puissance résiduelle d'éléments combustibles, comprenant :
- un récipient de calorimètre (2) adapté pour être placé dans un bassin de fluide de refroidissement (3) doté d'un puits de calorimètre (2a) vertical destiné à accueillir un élément combustible, comportant au moins une entrée de fluide de refroidissement (6, 34, 40) pour amener du fluide de refroidissement dans le puits de calorimètre (2a), et comportant au moins une sortie de fluide de refroidissement (4, 38) pour prélever du fluide de refroidissement dans le puits de calorimètre (2a), le puits de calorimètre (2a) présentant, à une extrémité supérieure (37), une ouverture de puits supérieure pour introduire l'élément combustible dans le puits de calorimètre (2a) et l'en extraire ;
- un système de conduites présentant au moins une conduite de prélèvement de fluide de refroidissement (5), reliée à la sortie de fluide de refroidissement (4, 38), et, de préférence, une conduite d'amenée de fluide de refroidissement (7) reliée à l'entrée de fluide de refroidissement (6, 34, 40) ;
- une pompe de circulation (12) reliée, côté entrée, à la conduite de prélèvement de fluide de refroidissement (5) et destinée à générer un flux de fluide de refroidissement à travers le puits de calorimètre (2a), le long de l'élément combustible, et à prélever du fluide de refroidissement dans le puits de calorimètre (2a), via la sortie de fluide de refroidissement (4, 38) et la conduite de prélèvement de fluide de refroidissement (5) ;
- un dispositif de mesure de débit (24) à la sortie de fluide de refroidissement (4, 38) ou dans la conduite de prélèvement de fluide de refroidissement (5), pour déterminer le volume de fluide de refroidissement prélevé dans le puits de calorimètre (2a) lors du fonctionnement ;
- un premier dispositif de mesure de température (21) à l'entrée de fluide de refroidissement (6, 34, 40) ou - si elle existe - dans la conduite d'amenée de fluide de refroidissement (7), pour déterminer la température du fluide de refroidissement amené dans le puits de calorimètre (2a) lors du fonctionnement ;
- un deuxième dispositif de mesure de température (23) à la sortie de fluide de refroidissement (4, 38) ou dans la conduite de prélèvement de fluide de refroidissement (5), pour déterminer la température du fluide de refroidissement prélevé dans le puits de calorimètre (2a) lors du fonctionnement ;
- un couvercle de fermeture (11) destiné à la fermeture réversible de l'ouverture de puits supérieure, le couvercle de fermeture (11) étant maintenu, lors du fonctionnement, de façon étanche sur l'ouverture de puits supérieure, du fait de la dépression vis-à-vis de l'environnement produite par la pompe de circulation (12) dans le puits de calorimètre (2a).

2. Dispositif (1) selon la revendication 1, dans lequel la densité moyenne du couvercle de fermeture (11) est inférieure à 990 kg/m3.

3. Dispositif (1) selon une des revendications précédentes, dans lequel la sortie de fluide de refroidissement (4, 38) est placée à l'extrémité supérieure (37) du puits de calorimètre (2a), en dessous de l'ouverture de puits supérieure.

4. Dispositif (1) selon une des revendications précédentes, dans lequel, pour réaliser la sortie de fluide de refroidissement (4, 38), le puits de calorimètre (2a) comporte de préférence une ouverture de sortie, en particulier un raccord de sortie (4, 38), situé à l'extrémité supérieure (37) du puits de calorimètre (2a), en dessous de l'ouverture de puits supérieure.

5. Dispositif (1) selon une des revendications 1 à 4, dans lequel, pour réaliser l'entrée de fluide de refroidissement (6, 34), au nombre d'au moins une, le puits de calorimètre (2a) est ouvert à une extrémité inférieure (35).

6. Dispositif (1) selon une des revendications 1 à 4, dans lequel le puits de calorimètre (2a) présente un fond (36) fermé à une extrémité inférieure, et dans lequel, pour réaliser l'entrée de fluide de refroidissement (6, 34, 40), au nombre d'au moins une, le puits de calorimètre (2a) présente une ouverture d'entrée supérieure, en particulier un raccord d'entrée supérieur (40), situé à l'extrémité supérieure (37) du puits de calorimètre (2a), en dessous de la sortie de fluide de refroidissement (4, 38), et/ou une ouverture d'entrée inférieure, en particulier un raccord d'entrée inférieur (6, 34), situé à une extrémité inférieure (35) du puits de calorimètre (2a), notamment sur le fond (36) fermé.

7. Dispositif (1) selon une des revendications précédentes, dans lequel le récipient de calorimètre (2), la conduite de prélèvement de fluide de refroidissement (5) - au moins entre la sortie de fluide de refroidissement (4, 38) et le deuxième dispositif de mesure de température (23) - et, si elle existe, la conduite d'amenée de fluide de refroidissement (7) - au moins entre l'entrée de fluide de refroidissement (6, 34, 40) et le premier dispositif de mesure de température (21) - sont isolés thermiquement, de préférence au moyen d'une isolation sous vide.

8. Dispositif (1) selon la revendication 7, dans lequel, pour réaliser l'isolation sous vide, le récipient de calorimètre (2), la conduite de prélèvement de fluide de refroidissement (5) - au moins entre la sortie de fluide de refroidissement (4, 38) et le deuxième dispositif de mesure de température (23) - et, si elle existe, la conduite d'amenée de fluide de refroidissement (7) - au moins entre l'entrée de fluide de refroidissement (6, 34, 40) et le premier dispositif de mesure de température (21) - sont réalisés avec une double paroi comportant une paroi interne et une paroi externe qui entoure la paroi interne, un espace susceptible d'être mis sous vide étant formé entre la paroi interne et la paroi externe.

9. Dispositif (1) selon la revendication 8, présentant en outre un premier dispositif de pompe à vide (15) destiné à générer un vide dans l'espace susceptible d'être mis sous vide.

10. Dispositif (1) selon une des revendications précédentes, dans lequel le système de conduites présente en outre une conduite de retour de fluide de refroidissement (10), sachant qu'une extrémité, située en amont, de la conduite de retour de fluide de refroidissement (10), est reliée côté sortie à la pompe de circulation (12), et sachant qu'une extrémité, située en aval, de la conduite de retour de fluide de refroidissement (10) peut être placée dans le bassin de fluide de refroidissement (3), aux fins de ramener le fluide de refroidissement.

11. Dispositif (1) selon une des revendications précédentes, présentant en outre un dispositif de thermostatisation de fluide de refroidissement (18, 20) destiné à thermostatiser le fluide de refroidissement devant être amené dans le puits de calorimètre (2a), le dispositif de thermostatisation de fluide de refroidissement (18, 20) comportant une cuve de mélange (13) ou un parcours de mélange, qui est relié(e) à une extrémité, située en amont, de la conduite d'amenée de fluide de refroidissement (7) et, si nécessaire une pompe de recirculation (14) destinée à faire recirculer le fluide de refroidissement dans la cuve de mélange (13) ou le parcours de mélange.

12. Dispositif (1) selon la revendication 11, dans lequel le système de conduites présente en outre une conduite d'aspiration de fluide de refroidissement (9), sachant qu'une extrémité, située en aval, de la conduite d'aspiration de fluide de refroidissement (9) débouche dans la cuve de mélange (13) ou le parcours de mélange, et sachant qu'une extrémité, située en amont, de la conduite d'aspiration de fluide de refroidissement (9) peut être disposée dans le bassin de fluide de refroidissement (3), en vue d'aspirer le fluide de refroidissement.

13. Dispositif (1) selon une des revendications 11 ou 12, dans lequel le dispositif de thermostatisation de fluide de refroidissement (18, 20) présente au moins un premier dispositif de régulation de température (18) pour chauffer ou refroidir le fluide de refroidissement devant être amené dans le puits de calorimètre (2a), le premier dispositif de régulation de température (18) étant placé dans une portion située entre la cuve de mélange (13) ou le parcours de mélange et le premier dispositif de mesure de température (18), dans la conduite d'amenée de fluide de refroidissement (7) ou autour de celle-ci.

14. Dispositif (1) selon la revendication 13, dans lequel le dispositif de thermostatisation de fluide de refroidissement (18, 20) présente un deuxième dispositif de régulation de température (20) pour chauffer ou refroidir le fluide de refroidissement devant être amené dans le puits de calorimètre (2a), le deuxième dispositif de régulation de température (20), destiné au chauffage ou au refroidissement, étant placé dans une portion située entre le premier dispositif de régulation de température (18), destiné au chauffage ou au refroidissement, et le premier dispositif de mesure de température (21), dans la conduite d'amenée de fluide de refroidissement (7) ou autour de celle-ci.

15. Dispositif (1) selon une des revendications précédentes, présentant en outre un deuxième dispositif de pompe à vide (16) destiné au remplissage par dépression, avec le fluide de refroidissement, du système de conduites et - s'ils existent - de la cuve de mélange (13) ou du parcours de mélange.

16. Dispositif (1) selon la revendication 15, dans lequel le deuxième dispositif de pompe à vide (16) est relié directement à la cuve de mélange (13) ou au parcours de mélange, en vue de générer une dépression dans la cuve de mélange (13) ou le parcours de mélange et le système de conduites qui y est raccordé.

17. Dispositif (1) selon une des revendications précédentes, dans lequel le système de conduites présente une conduite de liaison (31) susceptible d'être fermée, entre la conduite de prélèvement de fluide de refroidissement (5) et la conduite d'amenée de fluide de refroidissement (7).

18. Dispositif (1) selon une des revendications précédentes, dans lequel le récipient de calorimètre (2) présente un blindage en plomb (39) qui entoure le puits de calorimètre (2a) et sert de préférence de moyen de conversion de rayonnement gamma.

19. Dispositif (1) selon une revendication 18, dans lequel, pour faire passer le fluide de refroidissement sur la face externe du blindage en plomb (39), le récipient de calorimètre (2) présente un conduit de fluide de refroidissement qui entoure le blindage en plomb (39) et forme au moins une partie d'une liaison d'écoulement entre l'entrée de fluide de refroidissement (34, 40) et la sortie de fluide de refroidissement (4, 38).
